# EUROPEAN PATENT SPECIFICATION

(11) **EP 2 897 028 B1**
(45) Date of publication and mention of the grant of the patent: **19.06.2019**
(21) Application number: 14175701.3
(22) Date of filing: 03.07.2014
(51) Int. Cl.: G06F 3/023, G06F 3/0489, G06F 3/0484, G06F 3/0488, G06F 3/0481

(54) **Display device and method for controlling the same**
Anzeigevorrichtung und Ansteuerverfahren dafür
Dispositif d'affichage et son procédé de contrôle

(30) Priority: 15.01.2014 KR 20140004937
(43) Date of publication of application: 22.07.2015
(73) Proprietor: LG Electronics, Inc., Seoul 150-721 (KR)
(72) Inventor: Lee, Taehoon, 137-893 SEOUL (KR)
(74) Representative: Cabinet Plasseraud

(56) References cited:
- EP-A2- 2 416 564
- WO-A2-2012/149030
- US-A1- 2009 106 257
- US-A1- 2009 138 910

## Description

### BACKGROUND

### 1. Field

The present disclosure relates to a technology that can be applied to diverse display devices and, more particularly, to a display device and a method for controlling the same that are designed to first store first shortcut key information, which is provided by a webpage output from the display device, and, then, to map a second shortcut key, which performs the same function as a first shortcut key, to the first shortcut key and to store the mapped shortcut keys.

### 2. Background

A display device may output a webpage on a screen through at least one or more web browsers. And, the current webpage provides a user with diverse shortcut key functions. The user may be capable of quickly and easily performing a specific function through the webpage by using the shortcut key. Additionally, the display device may be paired with at least one or more external devices. And, the display device may perform data communication with its paired external device. For example, the display device corresponds to a mobile phone, a smart phone, a computer, a tablet PC, a notebook (or laptop) computer, a netbook, a television (TV), and other types of broadcast receiving devices. US2009/138910 discloses a system for setting and enabling a shortcut key on a remote control device. WO 2012/149030 A2 discloses a user interface for a mobile phone that allows a user to define shortcut keys for accessing different websites.

### SUMMARY OF THE INVENTION

Accordingly, the present disclosure is directed to a display device and a method for controlling the same that substantially obviate one or more problems due to limitations and disadvantages of the related art. In a first aspect, there is provided a method according to claim 1, and in a second aspect there is provided a device according to claim 8.

Another object of the present disclosure is to provide a display device and a method for controlling the same that can enhance user convenience in using a shortcut key, when a user is using a webpage, by allowing the user to set up a second shortcut key corresponding to a first shortcut key, which is predetermined in the webpage.

Yet another object of the present disclosure is to provide a display device and a method for controlling the same that can enhance user convenience in using the shortcut key even when the user is using multiple external input means, by allowing the user to set up a second shortcut key for each of the multiple external input means when setting up the second shortcut key(s).

A further object of the present disclosure is to specifically define a solution that can allow the user to quickly and easily set up a second shortcut key, by outputting a Key List Graphical User Interface (GUI) of the second shortcut key, which is available to be mapped to the first shortcut key, on the screen.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The embodiments will be described in detail with reference to the following drawings in which like reference numerals refer to like elements wherein:
FIG. 1 illustrates a detailed block view showing elements of a display device according to an exemplary embodiment of the present disclosure;
FIG. 2 illustrates a detailed block view of a controller shown in FIG. 1 ;
FIG. 3 illustrates a drawing briefly showing external features of a remote controller according to an exemplary embodiment of the present disclosure;
FIG. 4 illustrates a detailed block view showing elements of the remote controller shown in FIG. 3;
FIG. 5 illustrates a detailed block view showing configuration modules of a display device according to another exemplary embodiment of the present disclosure;
FIG. 6 illustrates a perspective view showing one side of external features of the display device according to the other exemplary embodiment of the present disclosure;
FIG. 7 illustrates a perspective view showing another side of external features of the display device according to the other exemplary embodiment of the present disclosure;
FIG. 8 illustrates a detailed block view showing configuration modules of a display device according to yet another exemplary embodiment of the present disclosure;
FIG. 9 illustrates a drawing for describing a shortcut key provided by a website, which is accessed by the display device according to the exemplary embodiment of the present disclosure;
FIG. 10 illustrates an example of the display device according to an exemplary embodiment of the present disclosure performing a process for processing shortcut keys;
FIG. 11 illustrates a flow chart showing a process of analyzing a shortcut key predetermined in the webpage, which is performed by the display device according to the exemplary embodiment of the present disclosure;
FIG. 12 illustrates an example of the display device according to the exemplary embodiment of the present disclosure outputting a shortcut key icon;
FIG. 13 illustrates an example of the display device according to the exemplary embodiment of the present disclosure outputting a shortcut key GUI including addition information of a shortcut key on the display screen;
FIG. 14 illustrates an example of the display device according to the exemplary embodiment of the present disclosure performing a specific function after receiving the mapped second shortcut key signal;
FIG. 15 illustrates an example of the display device according to the exemplary embodiment of the present disclosure outputting a Key List GUI, to which the first shortcut key can be mapped, on the display screen;
FIG. 16 illustrates a database of the display device according to the exemplary embodiment of the present disclosure;
FIG. 17 illustrates an example of the display device according to the exemplary embodiment of the present disclosure setting up a second shortcut key after receiving a touch input and a pattern input from an external input means;
FIG. 18 illustrates an example of the display device according to the exemplary embodiment of the present disclosure sharing second shortcut key data with webpages belonging to the same category by using a cloud server;
FIG. 19 illustrates an example of configuring another database with respect to an external input means being connected to the display device according to the exemplary embodiment of the present disclosure; and
FIG. 20 illustrates a flow chart showing a method for controlling the display device according to the exemplary embodiment of the present disclosure.

### DETAILED DESCRIPTION

The present disclosure will now be described in more detail with reference to the accompanying drawings.

The suffixes "module" and "unit" that are mentioned in the elements used for describing the present disclosure are merely used for the purpose of simplifying the description of the present disclosure. Therefore, the suffixes "module" and "unit" may also be alternately used for the reference of a specific element of the present disclosure.

Reference will now be made in detail to the preferred embodiments of the present disclosure, examples of which are illustrated in the accompanying drawings. However, the embodiment of the present disclosure described below may be modified to a wide range of modifications. And, therefore, it should be understood that the present disclosure will not be limited only to the example presented in the description of the present disclosure set forth herein.

In addition, although the terms used in this specification are selected from generally known and used terms, the terms used herein may be varied or modified in accordance with the intentions or practice of anyone skilled in the art, or along with the advent of a new technology. Alternatively, in some particular cases, some of the terms mentioned in the description of the present disclosure may be selected by the applicant at his or her discretion, the detailed meanings of which are described in relevant parts of the description herein. Furthermore, it is required that the present disclosure is understood, not simply by the actual terms used but by the meaning of each term lying within.

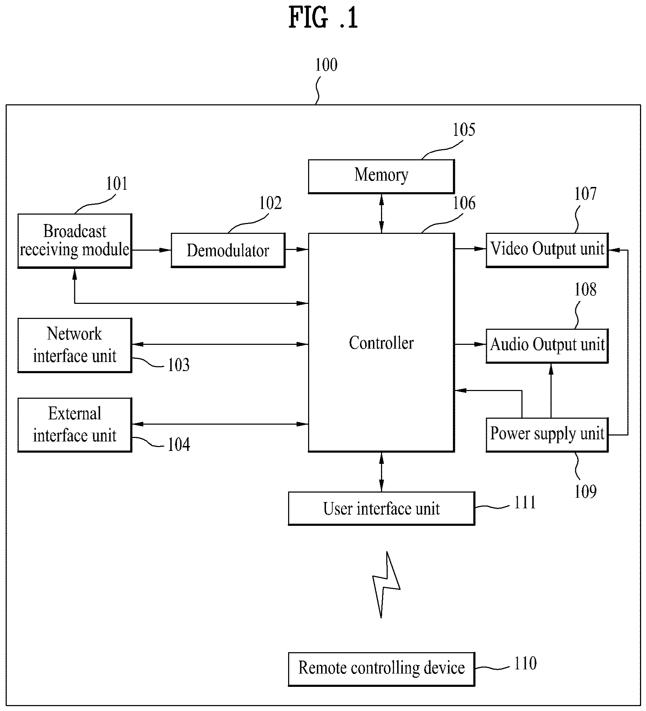

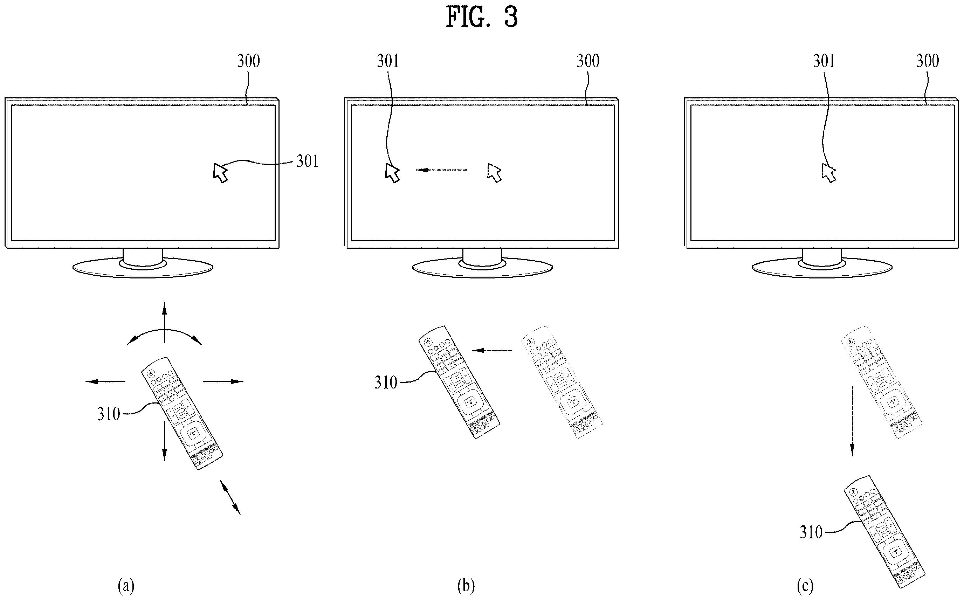

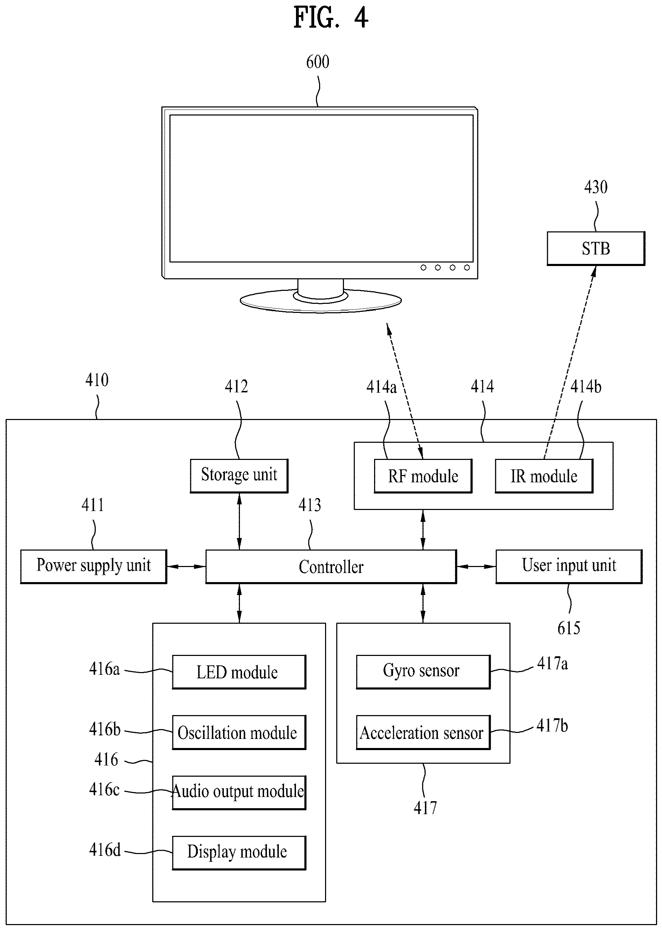

FIG. 1 illustrates a detailed block view showing elements of a display device according to an exemplary embodiment of the present disclosure. As shown in FIG. 1, the display device 100 according to exemplary embodiment of the present disclosure is configured to include a broadcast receiving module 101, a demodulator 102, a network interface unit 103, an external device interface unit 104, a memory 105, a controller 106, a video output unit 107, an audio output unit 108, a power supply unit 109, an external input means 110, and a user interface unit 111. Meanwhile, the display device 100 may be designed to perform data communication with a remote controller, a mobile device, and a keyboard, which respectively correspond to the external input means 110. And, a remote controller will hereinafter be given as an example of the external input means, and the remote controller will be described later on in more detail with reference to FIG. 3 and FIG. 4.

The broadcast receiving module 101 may, for example, be designed as an RF tuner or as an interface, which receives broadcast data from an external device, such as an STB, and so on. For example, the broadcast receiving module 101 may receive an RF broadcast signal of a single carrier according to an Advanced Television System Committee (ATSC) method, or the broadcast receiving module 101 may receive an RF broadcast signal of multiple carriers according to a Digital Video Broadcasting (DVB) method.

The demodulator 102 receives a digital IF (DIF) signal, which is converted by the broadcast receiving module 101, and performs demodulating operations. For example, if the digital IF signal being output from the broadcast receiving module 101 corresponds to the ATSC method, the demodulator 102 performs 8-Vestigial Side Band (8-VSB). Additionally, the demodulator 102 may also perform channel decoding.

The external device interface unit 104 corresponds to an interface enabling data communication to be performed between an external device and the display device 100. The external device interface unit 104 may be connected to an external device, such as a Digital Versatile Disk (DVD), a Bluray, a gaming device, a camera, a camcorder, a computer (or notebook computer), an STB, and so on, via wired and/or wireless connection. The external device interface unit 104 delivers video, audio or data signals inputted from an external source through the external device, which is connected to the external device interface unit 104. Additionally, the external device interface unit 104 may output the video, audio or data signals, which are processed by the controller 106, to the external device. The external device interface unit 104 may include a USB terminal, a Composite Video Banking Sync (CVBS) terminal, a component terminal, an S-video terminal (analog), a Digital Visual Interface (DVI) terminal, a High Definition Multimedia Interface (HDMI) terminal, an RGB terminal, a D-SUB terminal, and so on.

The network interface unit 103 provides an interface, which is configured to connect the display device 100 to a wired/wireless network including the Internet. In order to establish a connection with a wired network, the network interface unit 103 may, for example, be provided with an Ethernet terminal. And, in order to establish a connection with a wireless network, the network interface unit 103 may, for example, use a Wireless LAN (WLAN) (or WI-Fi), a Wireless broadband (Wibro), a World Interoperability for Microwave Access (Wimax), a High Speed Downlink Packet Access (HSPDA) communication standard, and so on. The network interface unit 103 may transmit/receive data to/from another user or another display device through the network accessed by the display device 100, or through another network, which is linked to the accessed network.

The memory 105 may store programs respective to signal processing and control within the controller and may also store the signal-processed video, audio or data signals. Additionally, the memory 105 may also perform a function of temporarily storing video, audio or data signals, which are inputted from the external device interface unit 104 or the network interface unit 103. Furthermore, for example, the memory 105 may store diverse OS, middleware, and platforms.

The user interface unit 111 may deliver a signal, which is inputted by the user, to the controller 106, and may then transmit the signal, which is received from the controller 106, to an external device (e.g., the remote controller 110). For example, in accordance with diverse communication methods, such as a Radio Frequency (RF) communication method, an infrared (IR) communication method, and so on, the user interface unit 111 may be designed to receive control signals corresponding to power on/off, channel selection, screen settings, and so on, and to process the received control signals, or the user interface unit 111 may be designed to transmit control signals, which are received from the controller 106, to the remote controller 110.

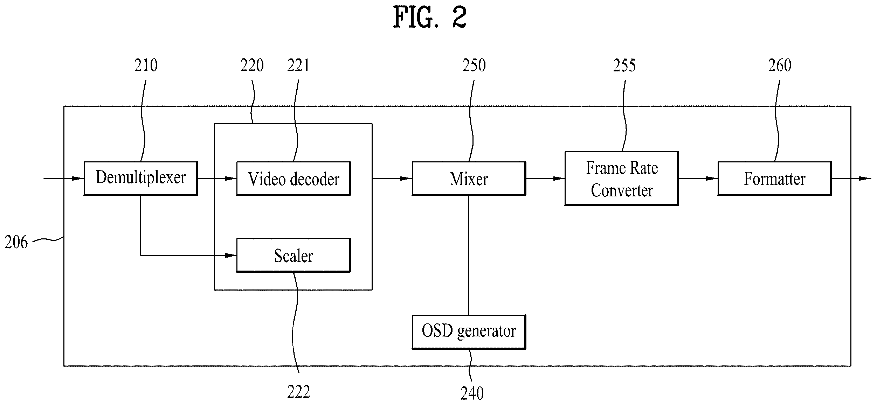

The controller 106 may demultiplex streams, which are inputted from the broadcast receiving module 101, the demodulator 102, the network interface unit 103, or the external device interface unit 104, or the controller 106 may process the demultiplexed signals, so as to generate and output signals for video or audio output. The controller 106 will be described later on in more detail with reference to FIG. 2.

The video output unit 107 may convert each of the video signals, data signals, or OSD signals, which are processed by the controller 106, or each of the video signals or data signals, which are received from the external device interface unit 104, to R, G, and B signals, so as to generate Drive signals. The video output unit 107 may correspond to a PDP, an LCD, an OLED, a flexible display, a 3D display, and so on.

The audio output unit 108 may receive signals, which are audio-processed by the controller 106, e.g., stereo signals, 3.1 channel signals, or 5.1 channel signals, and may output the received signals as sound. The audio output unit 108 may be realized in diverse forms of speakers.

The power supply unit 109 supplies power throughout the entire display device 100. Most particularly, the power supply unit 109 may supply power to the controller 106, which may be realized in the form of a System On Chip (SOC), to the video output unit 107, which is configured to display images, and to the audio output unit 108, which is configured to output audio.

FIG. 2 illustrates a detailed block view of a controller shown in FIG. 1. As shown in FIG. 2, the controller 206 of the display device may include a demultiplexer 210, an image processing unit 220, an OSD generator 240, a mixer 250, a frame rate converter 255, and a formatter 260. Additionally, the controller 206 may be designed to further include a sound processing unit (not shown) and a data processing unit (not shown).

The demultiplexer 210 demultiplexes an inputted stream. For example, if an MPEG-2 TS is being inputted, the demultiplexer 210 may demultiplex the inputted MPEG-2 TS, so as to divide the MPEG-2 TS to video, audio, and data signals.

The image processing unit 220 may perform image-processing of the demultiplexed video (or image) signal. In order to do so, the image processing unit 220 may be equipped with an image decoder 221 and a scaler 222. The image decoder 221 decodes the demultiplexed video signal, and the scaler 222 performs scaling on a resolution of the decoded video signal, so that the corresponding video signal can be output through the video output unit. Furthermore, the image processing unit 220 inputs the decoded video signal to the mixer 250.

The OSD generator 240 generates an OSD signal by itself or in accordance with a user input. Accordingly, the mixer 250 may mix the OSD signal, which is generated from the OSD generator 240, and the decoded video signal, which is image-processed (or video-processed) by the image processing unit 220. The mixed signal is provided to the formatter 260. Due to the mixing of the decoded broadcast video signal or externally inputted signal and the OSD signal, the broadcast image or externally inputted image may be displayed by having an OSD overlaying the displayed image.

The frame rate converter (FRC) 255 may convert the frame rate of an image that is being inputted. For example, the frame rate converter 255 may convert the frame rate of 60Hz to a frame rate of 120Hz or 240Hz.

Furthermore, the formatter 260 receives an output signal, which is converted by the frame rate converter 255, and converts the format of the received signal, so that the corresponding signal can be adequate to the video output unit, and, then, the formatter 260 outputs the converted signal. For example, the formatter 260 may output R, G, B data signals, and such R, G, B data signals may be output via Low voltage differential signaling (LDVS) or mini-LVDS.

FIG. 3 illustrates a drawing briefly showing external features of a remote controller according to an exemplary embodiment of the present disclosure. As shown in (a) of FIG. 3, a pointer 301 is displayed on a display screen of the display device 300 with respect to movements of the remote controller 310. The user may move or rotate the remote controller 310 along left-and-right (or horizontal) directions ((b) of FIG. 3) and up-and-down (or vertical) directions ((c) of FIG. 3). As described above, since a respective pointer 301 is moved and displayed in accordance with the movements of the remote controller 310 with a three-dimensional (3D) space, the remote controller 310 may also be referred to as a spatial controller. As shown in (b) of FIG. 3, if the user moves the remote controller 310 leftward, the pointer 301, which is displayed on the display screen of the display device 300 also moves leftward. Meanwhile, information on the movements of the remote controller 310, which are detected through a sensor of the remote controller 310, is transmitted to the display device 300. The display device 300 may calculate coordinates of the pointer 301 from the information on the movements of the remote controller 310. The display device 300 is designed to display a pointer 301 with respect to the calculated coordinates. Meanwhile, as shown in (c) of FIG. 3, if the user moves the remote controller 310 downward, the pointer 301, which is displayed on the display screen of the display device 300 also moves downward. Accordingly, the user may quickly select a specific section (or area) within the display screen of the display device 300 by using the remote controller 310 according to the exemplary embodiment of the present disclosure.

FIG. 4 illustrates a detailed block view showing elements of the remote controller shown in FIG. 3. As shown in FIG. 4, the remote controller 410 includes a wireless communication unit 414, a user input unit 415, a sensor unit 417, an output unit 416, a power supply unit 411, a storage unit 412, a controller 413, and so on.

The wireless communication unit 414 is designed to be capable of performing communication with an arbitrary external device. Most particularly, according to the exemplary embodiment of the present disclosure, an RF module 414a is designed to establish data communication with the display device 400, and an IR module 414b is designed to establish infrared communication with an external electronic device 430 (e.g., STB). Accordingly, the remote controller 410 may be realized to perform functions of a relay station, which forwards an infrared (IR) light ray code value that is received from the display device 400 to an STB 430. Furthermore, according to the exemplary embodiment of the present disclosure, the remote controller 410 transmits a signal, which carries information on the movements of the remote controller 410, through the RF module 414a. Additionally, the remote controller 410 may receive a signal, which is transmitted from the display device, through the RF module 414a. Moreover, whenever required, the remote controller 410 may transmit commands related to power on/off, channel change, volume change, and so on, to the display device 400 through the IR module 414b. The user input unit 415 may be configured of a keypad, a button, a touchpad, or a touchscreen.

The sensor unit 417 may be equipped with a gyro sensor 417a or an acceleration sensor 417b. The gyro sensor 417a may sense information on the movements of the remote controller 410. For example, the gyro sensor 417a may sense the information on the movements of the remote controller 410 with respect to an x-axis, a y-axis, and a z-axis. The acceleration sensor 417b may sense information on a movement rate (or speed) of the remote controller 410. And, the sensor unit 417 may be further equipped with a distance measurement sensor, and a distance between the sensor unit 417 and the display device 400 may be sensed by using the distance measurement sensor.

The output unit 416 may output a video or audio signal, which corresponds to the manipulation of the user input unit 415, or which corresponds to a signal transmitted from the display device 400. For example, when the user input unit 415 is manipulated, or when the display device transmits and/or receives a signal through the wireless communication unit 414, the output unit 416 may be equipped with an LED module 416a being turned on, a vibration module 416b generating vibration, a sound outputting module 416c outputting sound, or a display module 416d outputting images.

The power supply unit 411 supplies power to each elements of the remote controller 410. And, if the remote controller 410 does not move for a predetermined period of time, the power supply unit 411 stops the power supply, thereby being capable of reducing waste of power.

The storage unit 412 may store diverse types of programs, application data, and so on, which are required for the control or operation of the remote controller 410. And, the controller 413 controls overall details related to the control of the remote controller 410. For example, the controller 413 may transmit a signal respective to the manipulation of a predetermined key of the user input unit 415 or a signal respective to the movements of the remote controller 410, which is sensed by the sensor unit 417, to the display device 400 or the STB 430 through the wireless communication unit 414.

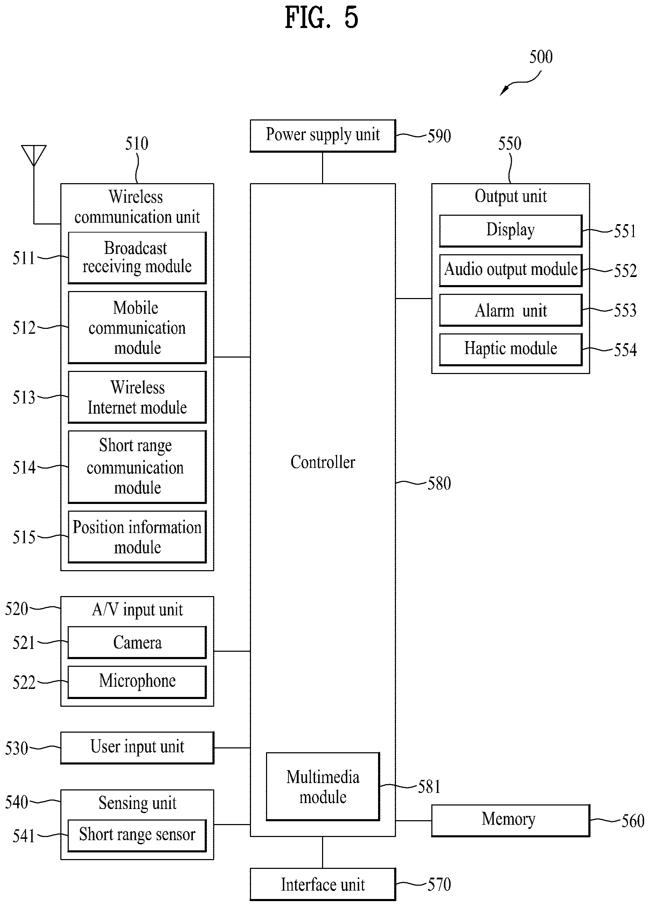

FIG. 5 illustrates a detailed block view showing configuration modules of a display device according to another exemplary embodiment of the present disclosure. The display device 500 according to the other exemplary embodiment of the present disclosure may include a wireless communication unit 510, an Audio/Video (A/V) input unit 520, a user input unit 530, a sensing unit 540, an output unit 550, a memory 560, an interface unit 570, a controller 580, and a power supply unit 590. Since the elements shown in FIG. 5 are not the essential elements of the display device 500, a display device 500 having a larger number of elements or a smaller number of elements may be realized.

The wireless communication unit 510 may include one or more modules enabling radio communication between the display device 500 and a wireless (or radio) communication system or between the display device 500 and a network where another display device is located. For example, the wireless communication unit 510 may include a broadcast receiving module 511, a mobile communication module 512, a wireless internet module 513, a short range communication module 514, and a position information module 515.

The broadcast receiving module 511 receives a broadcast signal and information related to broadcasting from an external broadcast management server through a broadcast channel. The broadcast management server may refer to a server, which is configured to generate a broadcast signal and/or information related to broadcasting and to transmit the generated broadcast signal and/or information related to broadcasting, or may refer to a server, which is configured to receive a pre-generated broadcast signal and/or information related to broadcasting and to transmit the received broadcast signal and/or information related to broadcasting to the device. The broadcast signal may include a TV broadcast signal, a radio broadcast signal, and a data broadcast signal, and may also include a broadcast signal consisting of a combination of a TV broadcast signal or a radio broadcast signal with a data broadcast signal. The information related to broadcasting may refer to information related to a broadcast channel, a broadcast program or a broadcast service provider. The information related to broadcasting may also be provided through a mobile communication network. In this case, the information related to broadcasting may be received through the mobile communication module 512. The information related to broadcasting may exist in diverse formats. For example, the information related to broadcasting may exist in an Electronic Program Guide (EPG) format of Digital Multimedia Broadcasting (DMB), an Electronic Service Guide (ESG) format of Digital Video Broadcast-Handheld (DVB-H), and so on. And, for example, the broadcast receiving module 511 may receive a digital broadcast signal by using a digital broadcasting system, such as a Digital Multimedia Broadcasting-Terrestrial (DMB-T) system, a Digital Multimedia Broadcasting-Satellite (DMB-S) system, a Media Forward Link Only (MediaFLO) system, a Digital Video Broadcast-Handheld (DVB-H) system, an Integrated Services Digital Broadcast-Terrestrial (ISDB-T) system, and so on. Evidently, the broadcast receiving module 511 may also be configured to be adequate for the above-described digital broadcasting system as well as other types of broadcasting systems. The broadcast signal and information related to broadcasting, which are received through the broadcast receiving module 511, may be stored in the memory 560.

The mobile communication module 512 transmits and/or receives a radio signal to and/or from at least one of a base station, an external terminal, and a server within a mobile communication network. The radio signal may include data of diverse formats respective to the transmission and/or reception (or transception) of an audio (or voice) call signal, a video phone call signal, or a text/multimedia message.

The wireless internet module 513 refers to a module configured to establish wireless internet access, and the wireless internet module 513 may be equipped inside or outside of the display device 500. Herein, Wireless LAN (WLAN) (or Wi-Fi), Wireless broadband (Wibro), World Interoperability for Microwave Access (Wimax), High Speed Downlink Packet Access (HSDPA), and so on may be used as the wireless internet technology.

The short range communication module 514 refers to a module configured to establish short range communication. Herein, Bluetooth, Radio Frequency Identification (RFID), Infrared Data Association (IfDA) communication, Ultra Wideband (UWB), ZigBee, and so on may be used as the short range communication technology.

The position information module 515 corresponds to a module configured to acquire a position of the display device 500, and a typical example of the position information module 515 may correspond to a Global Position System (GPS) module.

Referring to FIG. 5, the Audio/Video (A/V) input unit 520 is configured to input audio signals or video signals. And, herein, the A/V input unit 520 may include a camera 521, a microphone 522, and so on. The camera 521 processes an image frame of a still image or a moving picture image, which is acquired by an image sensor, when the camera 521 is being operated in a video phone mode or a video camera mode. The processed image frame may be displayed on a display unit 551.

The image frame, which is processed by the camera 521, may be stored in the memory 560 or may be transmitted to an external target through the wireless communication unit 510. Herein, at least two or more cameras 521 may be provided in accordance with the usage environment.

The microphone 522 receives an audio signal from an external source in a phone call mode, a voice recording mode, or a voice recognition mode and, then, the microphone 522 processes the received audio signal to electrical audio data. In case the microphone 522 is being operated in the phone call mode, the processed audio data may be converted to a format that can be transmitted to a mobile communication base station through the mobile communication module 512, and the converted audio data may then be output. Diverse noise removing algorithms may be implemented in the microphone 522 in order to remove noise, which may occur during the process of receiving audio signals from an external source.

The user input unit 530 generates input data enabling the user to control the operations of the display device 500. Herein, the user input unit 530 may be configured in the form of a key pad, a dome switch, a touch pad (static pressure type/capacitive), a jog wheel, a jog switch, and so on.

The sensing unit 540 senses the current state of the display device 500, such as an open and/or closed state of the display device 500, the position of the display device 500, the presence or absence of a user contact, bearings of the display device 500, acceleration and/or deceleration of the display device 500, and so on, and then generates a sensing signal for controlling the operations of the display device 500. For example, in case the display device 500 is a slider phone, the sensing unit 540 may sense whether the display device 500 is open or closed. Additionally, the sensing unit 540 may also sense whether or not power is being supplied from the power supply unit 590, whether or not an external device is combined with the interface unit 570. Meanwhile, the sensing unit 540 may include a short range sensor 541.

The output unit 550 may correspond to a unit for generating an output that is related to the visual sense, the auditory sense, the tactile sense (or haptic sense), and so on. Accordingly, the output unit 550 may include a display unit 551, an audio output module 552, an alarm unit 553, and a haptic module 554.

The display unit 551 displays (or outputs) information being processed by the display device 500. For example, in case the display device 500 is being operated in the phone call mode, the display unit 551 displays a user interface (UI) or a graphic user interface (GUI), which is associated with the respective phone call. In case the display device 500 is being operated in a video phone mode or a video recording mode, the display unit 551 displays a recorded image and/or a received image or a Ul or a GUI. The display unit 551 may include at least one of a liquid crystal display (LCD), a thin film transistor-liquid crystal display (TFT LCD), an organic light-emitting diode (OLED), a flexible display, and a three-dimensional display (3D display). Among the diverse types of displays listed above, some of the displays may be configured as transparent displays or light-transmitting displays, through which the external environment can be seen. This may be referred to as transparent displays. Herein, a Transparent OLED (TOLED) may correspond to a typical example of the transparent display. A rear end structure of the display unit 551 may be configured to have a light-transmitting structure. In accordance with such structure, the user may be capable of viewing the objects that are located behind the body of the display device (or display device body) through the area, which is occupied by the display device body.

Depending upon the implemented structure of the display device 500, two or more display units 551 may exist in the display device 500. For example, multiple display units may be positioned to be spaced apart from one another on a single surface or may be positioned as a single body. Alternatively, each of the multiple display units may also be positioned on different surfaces.

When the display unit 551 and a sensor sensing a touch motion (hereinafter referred to as a 'touch sensor') form an inter-layered structure (hereinafter referred to as a 'touch screen'), in addition to being used as an output device, the display unit 551 may also be used as an input device. The touch sensor may be configured as a touch film, a touch sheet, a touch pad, and so on.

The touch sensor may be configured to convert a change in a pressure level being applied to a specific area of the display unit 551, or a change in the capacitance occurring on a specific section (or area) of the display unit 551, and so on, to an electrical input signal. The touch sensor may be configured to detect not only the position or surface area of the display unit that is being touched but also the pressure level being applied to the display unit during the touch motion. When a touch input respective to the touch sensor exists, the respective signal(s) is (are) delivered to a touch controller. After processing the signal(s), the touch controller transmits the respective data to the controller 580. Thus, the controller 580 may be capable of knowing (or recognizing) which are of the display unit 551 is being touched. Referring to FIG. 5, a short range sensor 541 may be positioned in the internal area of the display device 500, which is covered (or enveloped) by the touch screen, or may be positioned within a short range of the touch screen. The short range sensor 541 refers to a sensor that can detect an object approaching a predetermined detecting surface of the corresponding sensor or that can detect the presence or absence of an object existing within a close proximity of the corresponding sensor, by using the intensity of an electromagnetic field or infrared light rays without using any mechanical touch. Herein, the short range sensor has a longer durability and a wider range of application (or usage) as compared to a touch-type sensor. Examples of the short range sensor may include a transmission photosensor, a direct reflection photosensor, a mirror reflection photosensor, a high-frequency oscillation-type proximity sensor, a capacitance proximity sensor, a magnetic-type proximity sensor, an infrared proximity sensor, and so on. When the touch screen is configured as an electrical static type touch screen, the approach of the pointer may be detected by a change in the electrical field respective to the short range approach of the pointer. In this case, the touch screen (touch sensor) may be categorized as a proximity sensor.

The audio output module 552 may output audio data, which are received from the wireless communication unit 510 during a call signal reception, or in a call-connection mode or a voice-recording mode, a voice recognition mode, a broadcast receiving mode, and so on, or which are stored in the memory 560. The audio output module 552 may also output a sound signal related to a function (e.g., a message reception tone, and so on) performed by the display device 500. Such audio output module 552 may include a receiver, a speaker, a buzzer, and so on.

The alarm unit 553 outputs a signal for notifying the occurrence of an event in the display device 500. Examples of the events occurring in the display device 500 may include the reception of an incoming call signal, the reception of a message, the input of a key signal, the input of a touch, and so on. In addition to the forms of a video signal or an audio signal, the alarm unit 553 may also output, for example, a signal for notifying the occurrence of an event via vibration. Since the video signal or the audio signal may also be output through the display unit 551 or the audio output module 552, the display unit 551 or the audio output module 552 may be categorized as a part of the alarm unit 553.

The haptic module 554 generates diverse sensory effects that may be felt (or sensed) by the user. Herein, vibration may correspond to a typical example of the sensory effects being generated by the haptic module 554. The haptic module 554 may control the intensity and pattern of the generated vibration. For example, the haptic module 554 may output a combination of different vibrations or may sequentially output a series of different vibrations.

In addition to vibration, the haptic module 554 may generate diverse haptic effects, such as effects caused by a variety of stimulation, such as effects caused by an alignment of pins performing movements perpendicular to the contacting surface of the user's skin, air projection force or air suction force through a projection hole or a suction hole, flicker movement (or touch) on the surface of the user's skin, contact of electrodes, electrostatic force, effects caused by the realization of heat or coldness using a device that can absorb heat or generate heat, and so on. The haptic module 554 may deliver haptic effects (or tactile or sensory effects) to the user via direct haptic (or tactile) contact. Moreover, the haptic module 554 may also be implemented so as to be capable of sensing the haptic effects through the muscular sensation (or kinesthetic sensation) of the user, such as the user's fingers or arm. Depending upon the configuration of the display device 500, two or more haptic modules 554 may be provided.

The memory 560 may store a program for the operations of the controller 580 and may temporarily store the data (e.g., message, still image, moving picture image, and so on). The memory 560 may store data related to diverse vibration patterns and sound, which are being output when a touch is inputted on the touch screen. The memory 560 may include at least one type of storage means, such as a flash memory type, a hard disk type, a multimedia card micro type, a card-type memory (e.g., SD or XD memory), a Random Access Memory (RAM), a Static Random Access Memory (SRAM), a Read-Only Memory (ROM), an Electrically Erasable Programmable Read-Only Memory (EEPROM), a Programmable Read-Only Memory (PROM), a magnetic memory, a magnetic disk, and an optical disk. The display device 500 may operate in relation with a web storage, which performs the same storage function as the memory 560 over the internet.

The interface unit 570 performs the function of a path between the display device 100 and all external devices being connected to the display device 500. The interface unit 570 may receive data from the external devices, or may be supplied with power so as to deliver the supplied power to each element configuring the display device 500, or may transmit data within the display device 500 to the external devices. For example, a wired/wireless headset port, an external recharger port, a wired/wireless data port, a memory card port, an port for connecting a device being equipped within an identification module, an audio input/output (I/O) port, a video input/output (I/O) port, an earphone port, and so on may be included in the interface unit 570.

An identification module corresponds to a chip storing diverse information for certifying usage authority of the display device 500. Herein, the identification module may include a User Identity Module (UIM), a Subscriber Identity Module (SIM), a Universal Subscriber Identity Module (USIM), and so on. The device being equipped with an identification module (hereinafter referred to as 'identification device') may be produced in the form of a smart card. Accordingly, the identification device may be connected to the display device 500 through a port.

The interface unit may perform the function of a path through which power being supplied from external cradles is supplied to the display device 500, when the display device 500 is connected to external cradles, and the interface unit may also perform the function of a path through which diverse command signals being inputted from the cradles are delivered to the display device 500. The diverse command signals or the power being inputted from the cradles may operate as signals for recognizing that the display device has been accurately mounted to (or connected to) the external cradles.

The controller 580 generally controls the overall operations of the display device 500. For example, the controller 580 performs control and processing functions associated with voice call connection, data communication, videophone call connection, and so on. The controller 580 may also be equipped with a multimedia module 581 for multimedia playback. The multimedia module 581 may be implemented within the controller 580 or may be separately implemented from the controller 580. The controller 580 may perform pattern recognition processing operations for recognizing writing input or drawing input performed on the touch screen and respectively processing the recognized inputs in the form of text and image.

The power supply unit 590 receives external power and internal power in accordance with the control of the controller 580 and, then, supplies the power required for the operations of each element. The various embodiments of the present disclosure being described in the description set forth herein may be implemented in a recording medium that can be read by a computer or a similar device by using, for example, software, hardware, or a combination of software and hardware.

In case of implementing the embodiments of the present disclosure in the form of hardware, the embodiment of the present disclosure may be implemented by using at least one of ASICs (application specific integrated circuits), DSPs (digital signal processors), DSPDs (digital signal processing devices), PLDs (programmable logic devices), FPGAs (field programmable gate arrays), processors, controllers, micro-controllers, microprocessors, and electrical units performing other functions. In some cases, the embodiments described in the description of the present disclosure may be implemented by the controller 580 itself.

In case of implementing the embodiments of the present disclosure in the form of software, the embodiments of the present disclosure corresponding to the procedures and functions described in the description of the present disclosure may be implemented as separate software modules. Herein, each of the software modules may perform at least one of the functions and operations described in the description of the present disclosure. A software code may be implemented by using a software application, which is written in an adequate programming language. The software code may be stored in the memory 560 and may be executed by the controller 580.

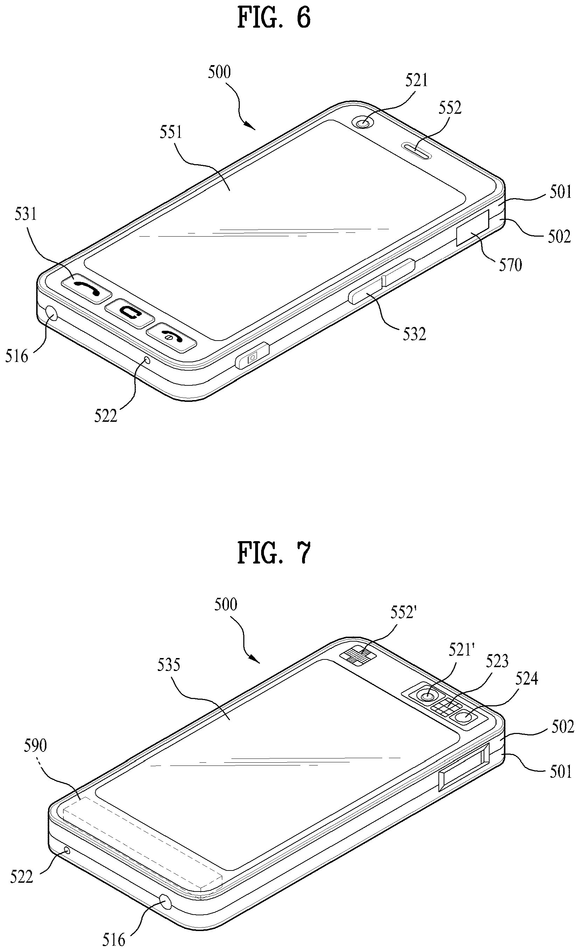

FIG. 6 illustrates a perspective view showing one side of external features of the display device according to the other exemplary embodiment of the present disclosure. The display device 500 shown in FIG. 5 is provided with a bar-shaped device body. However, the present disclosure will not be limited only to the exemplary shape presented herein. And, therefore, the present disclosure may be applied to diverse structures, such as a slide type device, a folder type device, a swing type device, a swivel type device, and so on, wherein two or more movable bodies are connected to one another. The body includes a case (casing, housing, cover, and so on) configuring the outside feature of the display device 500. According to the exemplary embodiment of the present disclosure, the case may be divided into a front case 501 and a rear case 502. Various types of electronic assembly parts are embedded in a space formed between the front case 501 and the rear case 502. At least one or more middle cases may be additionally positioned between the front case 501 and the rear case 502. Each of the cases may be created by injecting synthetic resin or may be formed of a metallic material, such as stainless steel (STS) or Titanium (Ti). A display unit 551, an audio output module 552, a camera 521, a user input unit 530/531 and 532, a microphone 522, an interface unit 570, and so on may be positioned in the device body, and more particularly in the front case 501.

The display unit 551 occupies most portion of main surface of the front case 501. The audio output module 552 and the camera 521 may be positioned at one end portion of the display unit 551, and the user input unit 531 and the microphone 522 may be positioned at another end portion of the display unit 551. The user input unit 532 and the interface unit 570 may also be positioned on side surfaces of the front case 501 and the rear case 502.

The user input unit 530 is manipulated (or operated) in order to receive a command for controlling the operations of the display device 500. Herein, the user input unit 530 may include multiple manipulating units 531 and 532. Herein, the manipulating units 531 and 532 may also be collectively referred to as manipulating portions. Any method that can manipulate the user input unit 530 in a tactile manner (i.e., allowing the user to feel a tactile sensation on the user input unit 530) may be adopted.

Contents (or commands) that are inputted through the first or second manipulating unit 531 or 532 may be diversely set up. For example, the first manipulating unit 531 may receive a command, such as Start, End, Scroll, and so on, and the second manipulating unit 532 may receive a command, such as Adjust audio volume or Shift operation mode of the display unit 551 to a Touch-recognition mode.

FIG. 7 illustrates a perspective view showing another side of external features of the display device according to the other exemplary embodiment of the present disclosure. As shown in FIG. 7, the rear side of the display device 500 body, i.e., the rear case 502 may be additionally equipped with a camera 521'. The camera 521' has a viewing (or recording) direction substantially opposite to that of the camera 521 (shown in FIG. 6), and the camera 521' may correspond to a camera that has different pixels as compared to the camera 521 shown in FIG. 6. For example, it is preferable that the camera 521 shown in FIG. 6 has a lower pixel level, so that the user can easily capture (or record) his (or her) face and transmit his (or her) recorded face to a counterpart party (i.e., the person to whom the user is talking), when the user is carrying out a video phone call. Conversely, it is preferable that the camera 521' shown in FIG. 7 has a higher pixel level, since the user captures (or records) an image of a general object yet does not immediately transfer the captured image. The cameras 521 and 521' may be installed in the device (or user equipment) body, so as to be rotated or to pop up. A flash 523 and a mirror 524 may be additionally positioned near the camera 521' shown in FIG. 7. In case of taking the picture of an object by using the camera 521' shown in FIG. 7, the flash 523 emits light on the corresponding object. And, when the user seeks to take a picture of himself (or herself) (a self-portrait) by using the camera 521' shown in FIG. 7, the user see his (or her) reflection through the mirror 524.

An audio output unit 552' may be additionally positioned in the rear side of the display device 500 body. The audio output unit 552' shown in FIG. 7 may realize a stereophonic function along with the audio output unit 552 shown in FIG. 6, and the audio output unit 552' may also be used for realizing a speaker phone mode when performing a phone call.

In addition to an antenna for performing a phone call, a broadcast signal receiving antenna 516 may be additionally positioned on a side surface of the display device 500 body. The antenna 516, which configures a portion of the broadcast receiving module 511, may be installed in the device body so as to be pulled out (or extended out) of the device body.

The device body is also equipped with a power supply unit 590 for supplying power to the display device 500. The power supply unit 590 may be embedded in the device body or may be detachably fixed to an external surface of the device body.

A touchpad 535 for detecting a touch motion may be additionally equipped to the rear case 502. Just as the display unit 551, the touchpad 535 may also be configured as a light-transmitting type. In this case, if the display unit 551 is configured to output visual information from both sides, the touchpad 535 may also be capable of recognizing the same visual information. The information being output to both sides may be collectively controlled by the touchpad 535. Alternatively, by additionally equipping the touchpad 535 with a display screen, a touch screen may also be positioned in the rear case 502.

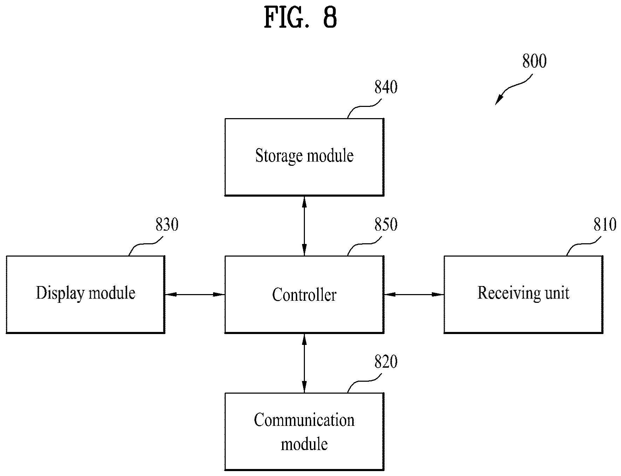

FIG. 8 illustrates a detailed block view showing configuration modules of a display device according to yet another exemplary embodiment of the present disclosure. Herein, some of the modules of the display device shown in FIG. 8 may be added or modified (or varied), with reference to the FIG. 1 to FIG. 7 described above. However, the scope of the present disclosure will not be decided based upon the elements described above in FIG. 1 to FIG. 8, and, by principle, the scope of the present disclosure should be decided based upon the appended claims of the present disclosure and not based upon the examples shown in FIG. 1 to FIG. 8. As shown in FIG. 8, the display device 800 according to the exemplary embodiment of the present disclosure is configured by including a receiving unit 810, a communication module 820, a display module 830, a storage module 840, and a controller 850.

The receiving unit 810 may receive a key input signal from an external input means. The external input means may correspond to the remote controller, which is described above with reference to FIG. 3 and FIG. 4. Additionally, the external input means may also correspond to a mobile device and a keyboard. The key input signal may be inputted through diverse communication methods, such as an RF communication method, an infrared (IR) communication method, and so on. Furthermore, the external input means may be paired with display device in order to be capable of transmitting/receiving data with the display device. The key input signal may correspond to a Shortcut key set-up signal. The receiving unit 810 may correspond to the user interface unit 111, which is described above in FIG. 1. The receiving unit may also be referred to herein as an input interface.

The communication module 820 may perform data communication with a website or a web server. The data communication may be established by using a wired/wireless networking method. The communication module 820 may correspond to the network interface unit 103, which is described above in FIG. 1.

The display module 830 may output at least one or more webpages on the display screen through a web browser. The display module 830 may correspond to the display unit 551, which is described above in FIG. 5.

The storage module 840 may store Shortcut Key mapping information, which is set up by the user, and additional information on the Shortcut key. Additionally, the storage module 840 may be equipped with a data base, which is configured to store shortcut key mapping information. The storage module 840 may correspond to the memory 105, which is described above in FIG. 1.

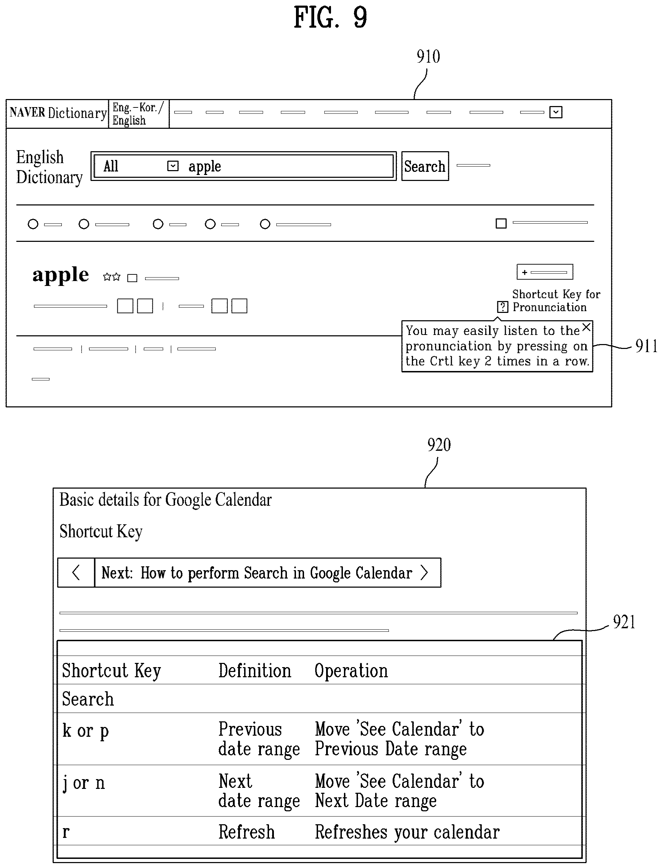

The controller 850 performs a function of managing the overall functions of at least one or more modules shown in FIG. 8, such as the receiving module 810, the communication module 820, the display module 830, and the storage module 840. The function of the controller 850 will hereinafter be described in more detail with reference to FIG. 9 to FIG. 20.

FIG. 9 illustrates a drawing for describing a shortcut key provided by a website, which is accessed by the display device according to the exemplary embodiment of the present disclosure.

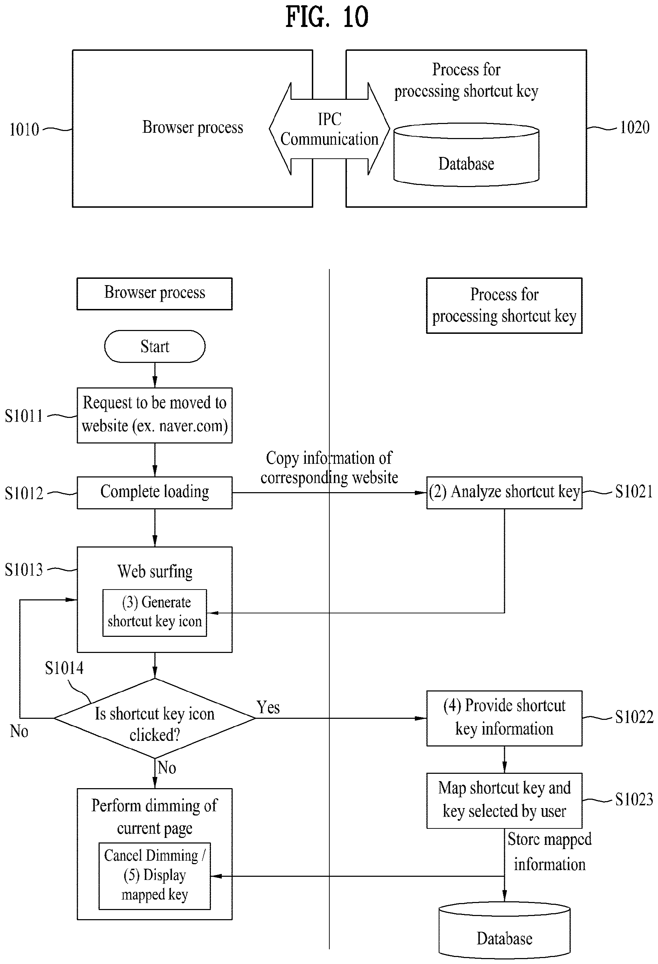

The display device according to the exemplary embodiment of the present disclosure may output a webpage on the display screen through a web browser, and so on. Additionally, the controller of the display device may perform controlling operations so that the display device can receive Shortcut key information, which is predetermined in order to allow a specific function to be executed from a webpage output on the display screen, from a website or a web server. Furthermore, the controller of the display device may perform controlling operations so that the display device can detect Shortcut key information, which is predetermined in order to allow a specific function to be executed from a webpage output on the display screen by carrying out a process for processing shortcut keys. The process for processing shortcut keys will be described later on in detail with reference to FIG. 10.

As shown in FIG. 9, the controller of the display device according to the exemplary embodiment of the present disclosure may perform controlling operations, so that the display device can output a first webpage 910 on the display screen and, then, output first shortcut key information 911 performing a specific function from the first webpage 910 on the display screen. Additionally, the controller of the display device according to the exemplary embodiment of the present disclosure may perform controlling operations, so that the display device can output a second webpage 920 and, then, output a shortcut key information notification page 921, which includes first shortcut key information performing a specific function from the first webpage 910 on the display screen. As shown in FIG. 9, the controller of the display device according to the exemplary embodiment of the present disclosure may carry out a process for notifying the user of shortcut key information by receiving or detecting shortcut key information, which is provided by the webpage.

FIG. 10 illustrates an example of the display device according to an exemplary embodiment of the present disclosure performing a process for processing shortcut keys.

The display device according to the exemplary embodiment of the present disclosure may perform multi-processing by being equipped with a browser process and a process for carrying out shortcut key processing. The browser process may handle all functions for carrying out general web browsing. The browser process may transmit/receive required data by performing Inter-process communication (IPC) with the process for shortcut key processing. The process for shortcut key processing may handle functions of recognizing the shortcut key information, which is predetermined in the webpage, and, then, providing the shortcut key information to the user. Additionally, by storing the shortcut key information, which is mapped by the user, in the database, the display device may be capable of reading the stored shortcut key information, which is mapped by the user, when the display device moves to the same webpage in a later process. Hereinafter, the procedure for the shortcut key mapping process will be described.

As shown in FIG.10, when the controller of the display device according to the exemplary embodiment of the present disclosure receives a request for outputting a webpage (S1011), the controller of the display device may perform controlling operations, so that the display device can output a specific webpage on the display screen based upon the received request (S1012). Thereafter, by receiving first shortcut key information, which is predetermined in order to execute a specific function from a webpage currently output on the display screen, or by virtually executing a shortcut key during the shortcut key processing process, the controller of the display device may perform controlling operations, so that the display device can detect the first shortcut key information (S1021). Subsequently, the controller of the display device may perform controlling operations, so that the display device can generate a shortcut key icon, which represents the first shortcut key, and output the generated icon on a specific section of the webpage (S1013). Afterwards, when the display device receives a signal selecting the shortcut key icon (S1014), the controller of the display device may perform controlling operations, so that the display device can output the first shortcut key information on the display screen (S1022). Thereafter, when the display device receives a signal input for a second shortcut key, which performs the same function as the first shortcut key, the controller of the display device may perform controlling operations, so that the display device can map the first shortcut key to the second shortcut key and store the mapped shortcut keys (S1023). After the mapping process, the first shortcut key and the second shortcut key may perform the same functions within the corresponding webpage.

More specifically, the controller of the display device according to the exemplary embodiment of the present disclosure may perform controlling operations, so that the display device can access a website, receive first shortcut key data of a webpage, which is output on the display screen, from the access website, generate a shortcut key icon representing the first shortcut key and outputting the generated icon on a specific section of the output webpage, receive a signal selecting the shortcut key icon, output a shortcut key GUI including additional information of the first shortcut key, which corresponds to the selected shortcut key icon, receive a second shortcut key set-up signal through the output shortcut key GUI, and map the first shortcut key with the second shortcut key and store the mapped shortcut keys.

The first shortcut key may correspond to a specific key, which is predetermined in order to perform a specific function in the output webpage.

The second shortcut key may correspond to a key configured to perform the same function as the first shortcut key.

The first shortcut key and the second shortcut key are different from one another, and the first shortcut key and the second shortcut key may correspond to a specific hard key within the keyboard.

By designing the display device as described above, it will be advantageous in that the user can personally set-up a convenient shortcut key, without having to memorize each shortcut key provided by the webpage one by one, thereby being capable of using the specific functions within the webpage more conveniently.

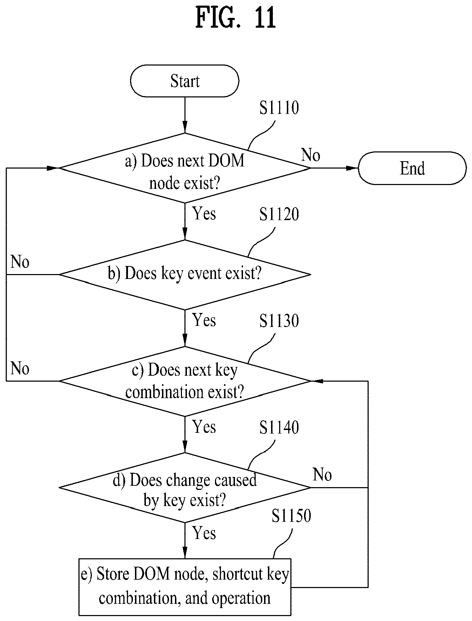

FIG. 11 illustrates a flow chart showing a process of analyzing a shortcut key predetermined in the webpage, which is performed by the display device according to the exemplary embodiment of the present disclosure.

As shown in FIG. 11, since the application range of the shortcut key is not the same even within the same webpage, shortcut key information is required to be detected by analyzing a Document Object Model (DOM) node. A process for analyzing the shortcut key first determines whether or not a next DOM node exists (S1110). Then, in case a next DOM node exists, the process determines whether or not a Key event respective to the next DOM node exists (S1120). Thereafter, in case a respective key event exists, the process determines whether or not a next key combination exists (S1130), and, in case a next key combination exists, the process determines whether or not a change caused by the shortcut key exists (S1140). Subsequently, in case a change caused by the shortcut key exists, the process may store information the dome node, the shortcut key combination, and the change caused by the shortcut key in the database (S1150).

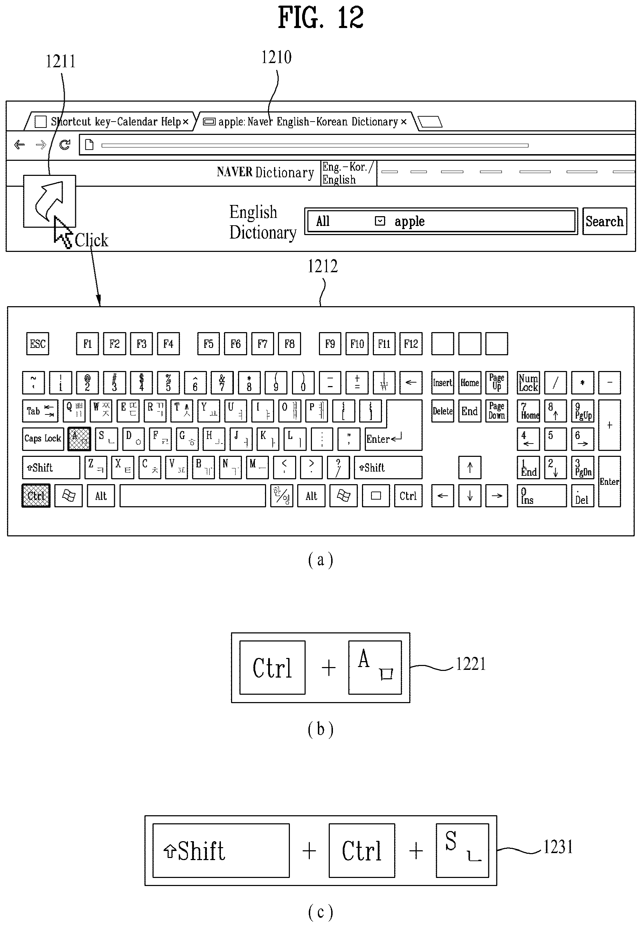

FIG. 12 illustrates an example of the display device according to the exemplary embodiment of the present disclosure outputting a shortcut key icon.

The controller of the display device according to the exemplary embodiment of the present disclosure may perform controlling operations, so that the display device can access a website, receive first shortcut key data of a webpage, which is output on the display screen, from the accessed website, and generate a shortcut key icon representing the first shortcut key and output the generated shortcut key icon to a specific section of the output webpage.

As shown in (a) of FIG. 12, the controller of the display device may perform controlling operations, so that the display device can first detect first shortcut key information performing a specific function from a first webpage 1210, and then generate a first shortcut key icon 1211 and output the generated icon 1211 to a specific section of the first webpage 1210. The first shortcut key icon 1211 may correspond to an image, which is set up by the user. Additionally, the controller of the display device may perform controlling operations, so that, when the display device receives a signal selecting the first shortcut key icon 1211, the display device can output a GU11212 for indicating hard key information of the shortcut key on the display screen.

As shown in (b) and (c) of FIG. 12, the controller of the display device may perform controlling operations, so that the display device can first detect second shortcut key information performing a specific function in a second webpage, and then generate second shortcut key icons 1221 and 1231 and output the generated icons 1221 and 1231 to a specific section of the second webpage. The second shortcut key icons 1221 and 1231 may include hard key information of the second shortcut key, and the second shortcut key icons 1221 and 1231 may be identical to hard key images of the second shortcut key.

By designing the display device as described above in FIG. 12, it will be technically advantageous in that the user can be capable of quickly and easily determining information indicating that the user can use shortcut key functions from the current webpage and the shortcut key information.

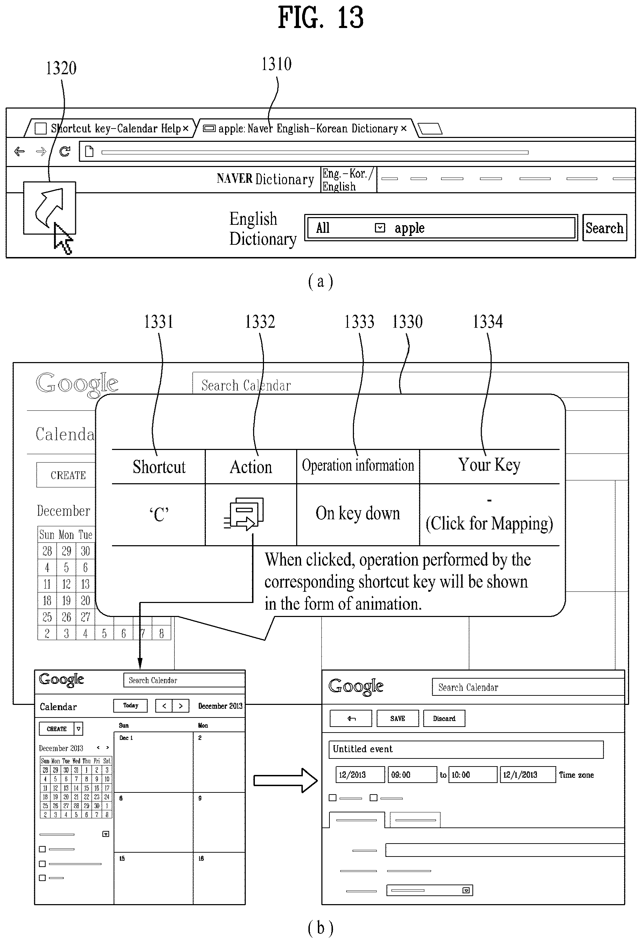

FIG. 13 illustrates an example of the display device according to the exemplary embodiment of the present disclosure outputting a shortcut key GUI including addition information of a shortcut key on the display screen.

As shown in (a) of FIG. 13, the controller of the display device according to the exemplary embodiment of the present disclosure may perform controlling operations, so that the display device can access a website, receive first shortcut key data of a webpage 1310, which is output on the display screen, from the accessed website, and generate a shortcut key icon 1320 representing the first shortcut key and outputting the generated shortcut key icon to a specific section of the output webpage 1310. Additionally, as shown in (b) of FIG. 13, the controller of the display device may perform controlling operations, so that the display device can receive a signal selecting the shortcut key icon 1320 and output a shortcut key GU11330 including additional information on the first shortcut key, which corresponds to the selected shortcut key icon 1320.

As shown in (b) of FIG. 13, the additional information on the first shortcut key may include hard key information 1331 of the first shortcut key, function information 1332 being realized by the first shortcut key, operation information 1333 of the first shortcut key, and mapping information 1334 of the second shortcut key. The function information 1332 being realized by the first shortcut key corresponds to information on a predetermined function, which is executed on the webpage, when the user inputs the first shortcut key. Herein, the function information 1332 being realized by the first shortcut key may be provided to the user via text, animation, or sound. Additionally, the operation information 1333 of the first shortcut key may include at least one of Onkeydown operation information, Onkeypress operation information, and Onkeyup operation information. The operation information may be referred to herein as an event attribute or a key event attribute. Moreover, when the user sets up a second shortcut key through the shortcut key GUI 1330, which includes additional information on the first shortcut key, the controller of the display device may perform controlling operations, so that the display device can map the first shortcut key to the second shortcut key and store the mapped shortcut keys in the database. When the first shortcut key and the second shortcut key are mapped to one another, hard key information of the mapped second shortcut key may be displayed on the shortcut key GUI 1330, which includes the additional information on the first shortcut key.

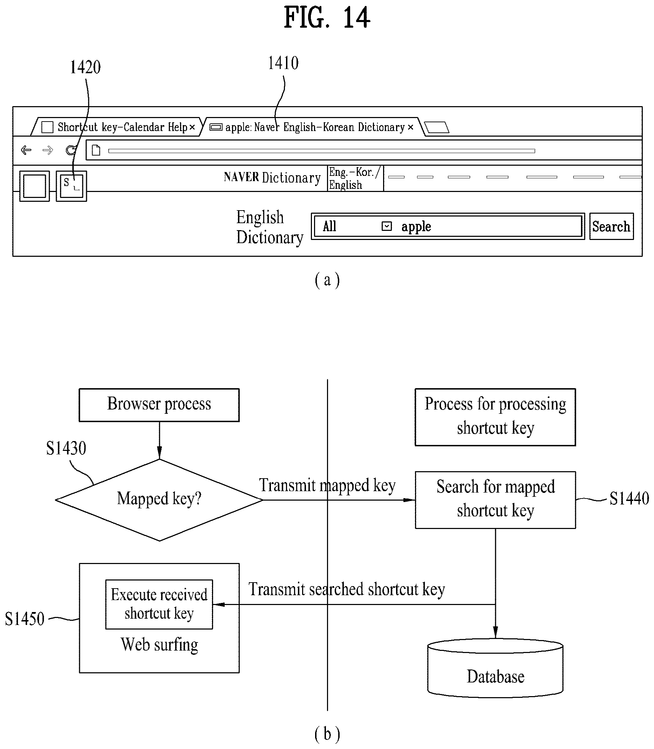

FIG. 14 illustrates an example of the display device according to the exemplary embodiment of the present disclosure performing a specific function after receiving the mapped second shortcut key signal.

As shown in (a) of FIG. 14, the controller of the display device according to the exemplary embodiment of the present disclosure may perform controlling operations, so that, when the first shortcut key and the second shortcut key are mapped to one another, the display device can output a shortcut key icon 1420, which represents a second shortcut key, on a specific section of the webpage 1410.

Additionally, as shown in (b) of FIG. 14, the controller of the display device according to the exemplary embodiment of the present disclosure may perform controlling operations, so that, when a second shortcut key signal is inputted (S1430) after the first shortcut key and the second shortcut key are mapped to one another, the display device can access the database and detect first shortcut key information, which corresponds to the inputted second shortcut key (S1440). Then, the controller of the display device may perform controlling operations, so that the display device can perform a specific function with the output webpage based upon the detected first shortcut key information (S1450).

By designing the display device as described above in FIG. 14, since the display device according to the exemplary embodiment of the present disclosure accesses the database by carrying out the shortcut key processing process, only when a mapped shortcut key is inputted, the display device does not perform any unnecessary processes when performing general web browsing operations, it will be advantageous in the aspect of time and power consumption.

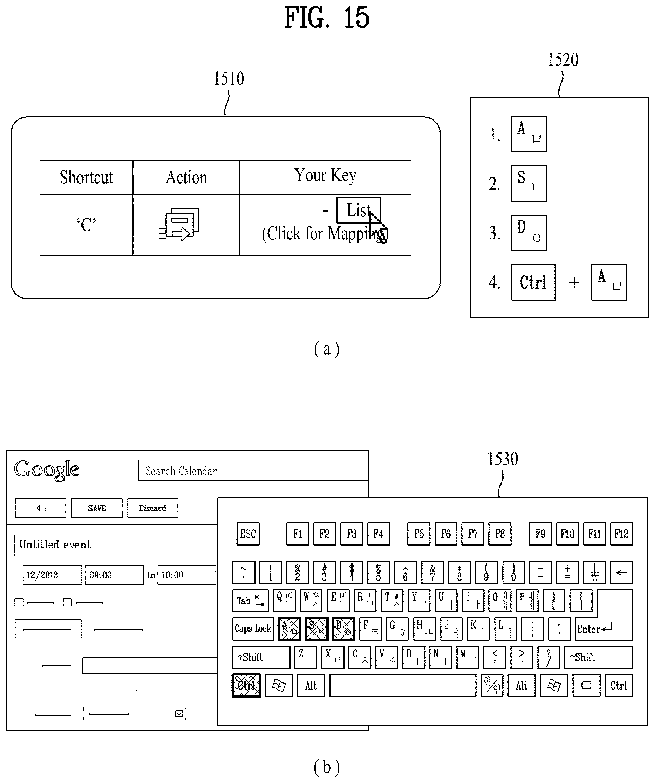

FIG. 15 illustrates an example of the display device according to the exemplary embodiment of the present disclosure outputting a Key List GUI, to which the first shortcut key can be mapped, on the display screen.

As shown in FIG. 15, the controller of the display device according to the exemplary embodiment of the present disclosure may perform controlling operations, so that the display device can access a website, receive first shortcut key data of a webpage, which is output on the display screen, from the accessed website, generate a shortcut key icon representing the first shortcut key and outputting the generated shortcut key icon to a specific section of the output webpage, receive a signal selecting the shortcut key icon, and output a shortcut key GUI including additional information on the first shortcut key, which corresponds to the selected shortcut key icon. Additionally, the controller of the display device may perform controlling operations, so that the display device can output a Key List GUI, which can be mapped with the first shortcut key, on the display screen. The Key List GUI may be output on the display screen in a display format highlighting a specific hard key within an image of the keyboard or external input means. For example, as shown in (a) of FIG. 15, the Key List GUI 1520 may be configured in the form of text. And, in case the Key List GU11520 is configured in the form of text, information on the keys that are available for mapping may be aligned based upon priority levels. Herein, the priority levels may correspond to an order of mapping preference of users using a webpage after receiving the order of mapping preference from a web server. Alternatively, the priority levels may correspond to an order of mapping preference of a user being currently logged-in. Additionally, as shown in (b) of FIG. 15, the Key List GUI 1530 may include an image of a keyboard or an external input means, which is currently connected to the display device, and the Key List GUI 1530 may be output in a display format highlighting a specific hard key within an image of the keyboard or external input means. By providing a Key List GUI that is available for mapping to the user, as described above, it will be advantageous in that the user can quickly and easily set up a key, which he (or she) wishes to use as the shortcut key.

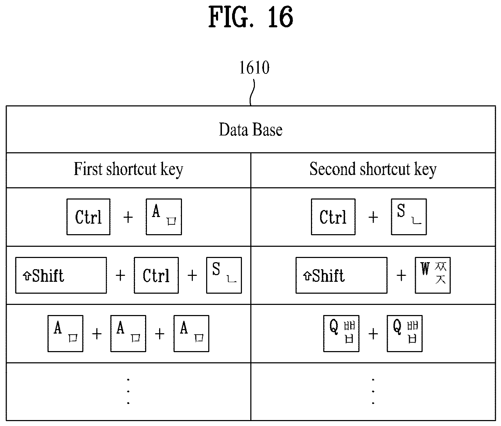

FIG. 16 illustrates a database of the display device according to the exemplary embodiment of the present disclosure.

As shown in FIG. 16, the storage module of the display device according to the exemplary embodiment of the present disclosure may include a database 1610 configured to store shortcut key mapping information. The database 1610 may include shortcut key information, which is mapped by the user for each webpage. Additionally, although it is not shown in FIG. 16, the database 1610 may also store information on second shortcut keys each mapped to the same first shortcut key by different external input means. For example, in case the first shortcut key corresponds to 'c', a first second shortcut key may correspond to 'a' of the keyboard, and a second second shortcut key may correspond to 'b' of a mobile device, or a button on a remote controller, and the data base 1610 may include all second shortcut key information mapped by each external input means. Accordingly, the controller of the display device may detect shortcut key data from the database 1610 based upon the information on the external input means, which is currently connected to the display device.

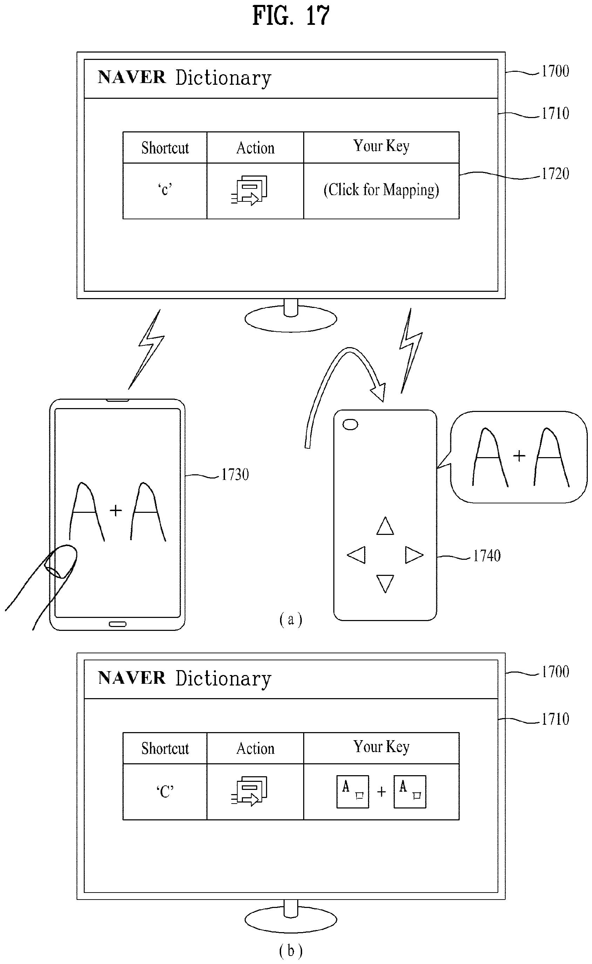

FIG. 17 illustrates an example of the display device according to the exemplary embodiment of the present disclosure setting up a second shortcut key after receiving a touch input and a pattern input from an external input means.

As shown in (a) of FIG. 17, the controller of the display device 1700 according to the exemplary embodiment of the present disclosure may perform controlling operations, so that the display device can output a shortcut key GUI 1720 on the display screen along with a webpage 1710. Herein, the shortcut key GUI 1720 includes additional information on a first shortcut key, which performs a specific function in the webpage 1710. Additionally, when a touch input for setting up a second shortcut key is received from a first external input means 1730, which is connected to the display device 1700, the controller of the display device 1700 may perform controlling operations, so that the display device 1700 can map the first shortcut key and the second shortcut key to one another and then store the mapped shortcut keys in the database. The first external input means 1730 may correspond to a mobile device.

Moreover, when a pattern input for setting up a second shortcut key is received from a second external input means 1740, which is connected to the display device 1700, the controller of the display device 1700 may perform controlling operations, so that the display device 1700 can map the first shortcut key and the second shortcut key to one another and then store the mapped shortcut keys in the database. The second external input means 1740 may correspond to a remote controller.

Although it is not shown in FIG. 17, the input signal for setting up the second shortcut key may correspond to an audio signal (or sound signal). More specifically, when an audio signal for setting up a second shortcut key is received through a microphone of the display device 1700, the controller of the display device 1700 may perform controlling operations, so that the display device can detect the second shortcut key data, which correspond to the received audio signal, by using an Analog-Digital Converter and map the first shortcut key and the detected second shortcut key to one another and store the mapped shortcut keys in the data base. By designing the display device as described above in FIG. 17, it will be advantageous in that the user is capable of easily and conveniently setting up a second shortcut key even from a remote distance.

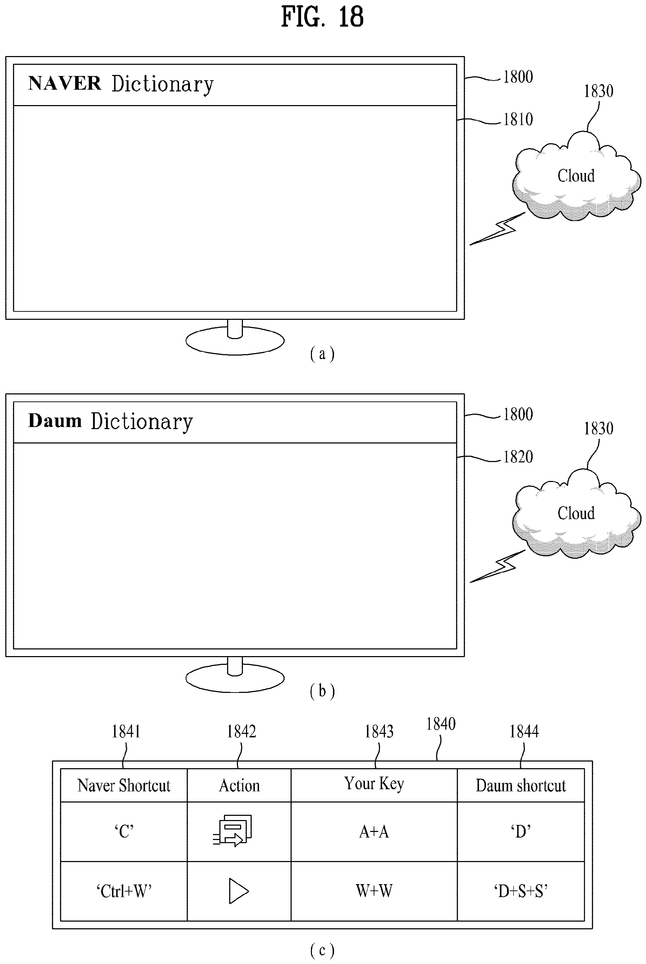

FIG. 18 illustrates an example of the display device according to the exemplary embodiment of the present disclosure sharing second shortcut key data with webpages belonging to the same category by using a cloud server.

As shown in (a) of FIG. 18, the controller of the display device 1800 according to the exemplary embodiment of the present disclosure may perform controlling operations, so that the display device can access a first webpage 1810 through a web browser and upload additional information of a first shortcut key, which performs a specific function within the first webpage 1810, information on a second shortcut key being mapped to the first shortcut key, and information on the category of the first webpage. The additional information of the first shortcut key may include information on a hard key of the first shortcut key, information on a function being realized by the first shortcut key, information on operations of the first shortcut key.

Additionally, as shown in (b) of FIG. 18, the controller of the display device 1800 according to the exemplary embodiment of the present disclosure may perform controlling operations, so that the display device 1800 can access a second webpage 1820 through a web browser. Moreover, the controller of the display device 1800 may perform controlling operations, so that, when it is determined that a category of the second webpage 1820 is the same as a category of the first webpage 1810, after comparing the category of the second webpage 1820 with the category of the first webpage 1810, the display device 1800 can download additional information of the first shortcut key, which performs a specific function within the first webpage 1810, and information on the second shortcut key being mapped to the first shortcut key from the cloud server.

In addition, the controller of the display device 1800 may detect information on a third shortcut key, which performs a specific function in the second webpage 1820, and may determine whether or not a third shortcut key performing the same function as the first shortcut key, which performs a specific function in the first webpage 1810, exists. Thereafter, in case a third shortcut key performing the same function as the first shortcut key exists, the controller of the display device 1800 may perform controlling operations, so that the display device 1800 can map the first shortcut key, the second shortcut key, and the third shortcut key to one another and store the mapped shortcut keys in the database, and then upload the mapped data to the cloud server 1830.

For example, it will be assumed that both the first webpage 1810 and the second webpage 1820 correspond to webpages belonging to a Dictionary category, that the first shortcut key, which is configured to output a pronunciation of a word searched by the user in the first webpage 1810 through a speaker, corresponds to 'a', and that the user sets up the second shortcut key, which performs the same function as the first shortcut key, as 'b'. At this point, in case the third shortcut key, which is configured to output a pronunciation of a word searched by the user in the second webpage 1820 through the speaker, corresponds to 'c', the controller of the display device 1800 may perform controlling operations, so that the display device 1800 can map the first shortcut key 'a', the second shortcut key 'b', and the third shortcut key 'c' to one another and then store the mapped shortcut keys in the database. Accordingly, the controller of the display device 1800 may perform controlling operations, so that, when the user inputs 'b' in the first webpage 1810 or in the second webpage 1820, the display device 1800 can output the pronunciation of the currently searched word through the speaker.

Additionally, as shown in (c) of FIG. 18, the database 1840 may map hard key information 1841 of the first shortcut key belonging to the first webpage, function information 1842 being performed in the webpage, hard key information 1843 of the second shortcut key, which is set up by the user, and hard key information 1844 of the third shortcut key belonging to the second webpage and may then store the mapped information. By designing the display device as described above in FIG. 18, it will be advantageous in that the user can directly use the shortcut keys, which are set up by the user, without having to separately set up shortcut keys for each of the multiple webpages belonging to the same category.

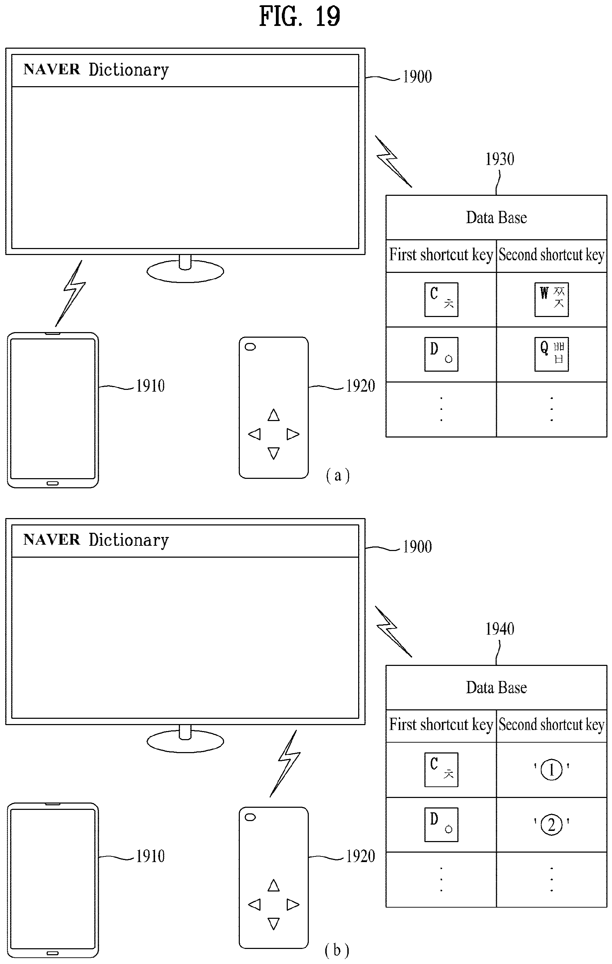

FIG. 19 illustrates an example of configuring another database with respect to an external input means being connected to the display device according to the exemplary embodiment of the present disclosure.

The display device 1900 according to the exemplary embodiment of the present disclosure may store different shortcut key mapping data to the database in accordance with the external input means, which is connected to the display device 1900. For example, as shown in (a) of FIG. 19, in case a first external input means 1910 is connected to the display device 1900, the controller of the display device 1900 may perform controlling operations, so that the display device 1900 can detect spec information of the first external input means 1910 and extract shortcut key mapping data 1930 corresponding to the detected spec information of the first external input means by accessing the database.

Additionally, as shown in (b) of FIG. 19, when the display device 1900 establishes connection with the second external input means 1920, the controller of the display device 1900 may perform controlling operations, so that the display device 1900 can detect spec information of the second external input means 1920 and extract shortcut key mapping data 1940 corresponding to the detected spec information of the second external input means 1920 by accessing the database. Here, the display device 1900 may disconnect its connection with the first external input means 1910, then establish a connection with the second external input means 1920. Additionally, the controller of the display device 1900 may perform controlling operations, so that the display device 1900 can extract shortcut key mapping data 1930 and 1940 respective to each of the first external input means 1910 and the second external input means 1920, when the first external input means 1910 and the second external input means 1920 are connected to the display device at the same time.

Furthermore, the display device 1900 according to another exemplary embodiment of the present disclosure may be controlled to also map second shortcut keys for each device with respect to the first shortcut key of the same webpage and to store the mapped data in the database. By designing the display device as described above in FIG. 19, by separately managing the predetermined shortcut key mapping data, even when the user uses multiple external input means in order to control the display device 1900, since the display device may extract only the required data in accordance with the corresponding external input means, it will be advantageous in the aspect of usage of memory capacity.

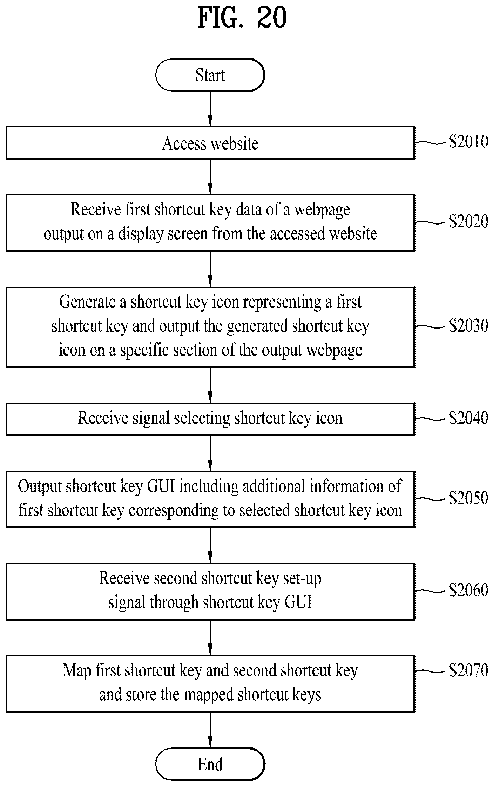

FIG. 20 illustrates a flow chart showing a method for controlling the display device according to the exemplary embodiment of the present disclosure. As shown in FIG. 20, the display device according to the exemplary embodiment of the present disclosure is configured to access a website (S2010), receive first shortcut key data of a webpage output on a display screen from the accessed website (S2020), generate a shortcut key icon representing a first shortcut key and output the generated shortcut key icon on a specific section of the output webpage (S2030), receive a signal selecting the shortcut key icon (S2040), output a shortcut key Graphical user interface (GUI) including additional information of the first shortcut key corresponding to the selected shortcut key icon (S2050), receive a second shortcut key set-up signal through the shortcut key GUI (S2060), and map the first shortcut key and a second shortcut key and store the mapped shortcut keys (S2070). Since each process step has already been described above in detail, detailed description of the same will be omitted for simplicity.

As described above, the display device and the method for controlling the same have the following advantages. According to an exemplary embodiment of the present disclosure, by allowing the user to set up a second shortcut key corresponding to a first shortcut key, which is predetermined in the webpage, the present disclosure may enhance user convenience in using a shortcut key, when a user is using a webpage.

According to another exemplary embodiment of the present disclosure, by allowing the user to set up a second shortcut key for each of the multiple external input means when setting up the second shortcut key, the present disclosure may enhance user convenience in using the shortcut key even when the user is using multiple external input means.

According to yet another object of the present disclosure, by outputting a Key List Graphical User Interface (GUI) of the second shortcut key, which can be mapped to the first shortcut key, on the display screen, the present disclosure may specifically define a solution that can allow the user to quickly and easily set up a second shortcut key.

To achieve these objects and other advantages and in accordance with the purpose of the disclosure, as embodied and broadly described herein, a method for controlling a display device includes the steps of accessing a website, receiving first shortcut key data of a webpage output on a display screen from the accessed website, generating a shortcut key icon representing a first shortcut key and outputting the generated shortcut key icon on a specific section of the output webpage, receiving a signal selecting the shortcut key icon, outputting a shortcut key Graphical user interface (GUI) including additional information of the first shortcut key corresponding to the selected shortcut key icon, receiving a second shortcut key set-up signal through the shortcut key GUI, and mapping the first shortcut key and a second shortcut key and storing the mapped shortcut keys. Herein, the first shortcut key may correspond to a specific key predetermined in order to perform a specific function within the webpage, and the second shortcut key may perform the same function as the first shortcut key.

In another aspect of the present disclosure, a display device may include a display module configured to output a webpage on a display screen, a communication module configured to perform data communication with a website, a receiving unit configured to receive a key signal from an external input means, a storage module configured to store shortcut key mapping information and additional information of a shortcut key, and a controller configured to control operations of the display device, wherein the controller may be further configured to access a website, to receive first shortcut key data of a webpage output on a display screen from the accessed website, to generate a shortcut key icon representing a first shortcut key and to output the generated shortcut key icon on a specific section of the output webpage, to receive a signal selecting the shortcut key icon, to output a shortcut key Graphical user interface (GUI) including additional information of the first shortcut key corresponding to the selected shortcut key icon, to receive a second shortcut key set-up signal through the shortcut key GUI, and to map the first shortcut key and a second shortcut key and to store the mapped shortcut keys. Herein, the first shortcut key may correspond to a specific key predetermined in order to perform a specific function within the webpage, and the second shortcut key may perform the same function as the first shortcut key.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for controlling a display device (100), comprising:
accessing a website;
receiving, at the display device (100) from the accessed website, first shortcut key information, which is predetermined in order to execute a specific function on a webpage;
generating an icon representing a first shortcut key based on the first shortcut key information;
displaying, on a display, the generated icon in a prescribed section of the webpage;
receiving a signal selecting the icon;
displaying, on the display, a graphical user interface, GUI (1330), that includes displayed information of the first shortcut key in response to the signal selecting the icon, wherein the displayed information corresponds to key information (1331) of the first shortcut key and function information (1332) on a function being realized by the first shortcut key, whereby the function information is provided to a user via a text, an animation or a sound, in response to an input selecting specific information displayed on the GUI;
receiving an input to setup a second shortcut key based on the displayed information; and
mapping the first shortcut key to the second shortcut key and storing the mapped first and second shortcut keys such that the second shortcut key performs the same function as the first shortcut key,
wherein the first shortcut key corresponds to a specific hard key or a prescribed key on a virtual keyboard to perform the specific function within the webpage, and
wherein the first shortcut key and the second shortcut key are different from each other, and
wherein the first shortcut key corresponds to a key on a first external input device (110) and the second shortcut key corresponds to a key on a second external input device different than the first external input device (110),
and wherein further the external input devices corresponds to at least one of a remote controller, mobile phone, tablet or keyboard.

2. The method of claim 1, wherein the virtual keyboard is displayed on the display or the first or second external input devices coupled to the display device (100).

3. The method of claim 1, wherein an image of the icon for the first shortcut key is an image of a key on the first or second external input devices.

4. The method of claim 1, wherein the information of the first shortcut key displayed on the GUI further includes a key event attribute associated with the first shortcut key.

5. The method of claim 4, wherein the key event attribute includes at least one of onkeydown operation information, onkeypress operation information, or onkeyup operation information.

6. The method of claim 1, further comprising:
displaying, on the display, a Key List GUI that includes at least one key available to be mapped with the first shortcut key.

7. The method of claim 6, wherein the Key List GUI includes an image of the keyboard or the first or second external input devices, prescribed keys on the image being highlighted corresponding to shortcut keys.

8. A display device (100), comprising:
a display;
a communication module (820) configured to access a website to display a webpage on the display and to receive, from the accessed website, first shortcut key information, which is predetermined in order to execute a specific function on the webpage;
an input interface configured to receive a signal for selecting the shortcut from an external input device;
a storage module (840) configured to store mapping information to access the plurality of shortcut keys; and
a controller (850) configured to control the display based on the signal using the stored mapping information,
wherein an icon representing a first shortcut key is displayed based on the received shortcut key information, a graphical user interface, GUI, that includes displayed information infestation the first shortcut key displayed in response to a selection of the icon, wherein the displayed information corresponds to key information (1331) of the first shortcut key and the controller provides function information (1332) on a function being realized by the first shortcut key via a text, an animation or a sound in response to an input selecting specific information displayed on the GUI, an input to setup a second shortcut key is received based on the displayed information, and the controller maps the first shortcut key to the second shortcut key such that the second shortcut key performs the same function as the first shortcut key and stores the mapped first and second shortcut keys in the storage module,
wherein the first shortcut key corresponds to a specific hard key or a prescribed key on a virtual keyboard to perform the specific function within the webpage, and
wherein the first shortcut key and the second shortcut key are different from each other, and
wherein the first shortcut key corresponds to a key on a first external input device and the second shortcut key corresponds to a key on a second external input device different than the first external input device,
and wherein further the external input devices corresponds to at least one of a remote controller, mobile phone, tablet or keyboard.

9. The display device (100) of claim 8, wherein the virtual keyboard is displayed on the display or the first or second external input device coupled to the display device (100).

## Patentansprüche

1. Verfahren zum Steuern einer Anzeigevorrichtung (100), mit den Schritten:
Aufrufen einer Website;
Empfangen erster vorgegebener Shortcut-Tasteninformation an der Anzeigevorrichtung (100) von der aufgerufenen Website zum Ausführen einer bestimmten Funktion auf einer Webseite;
Erzeugen eines Symbols, das eine erste Shortcut-Taste darstellt, basierend auf der ersten Shortcut-Tasteninformation;
Anzeigen des erzeugten Symbols in einem vorgeschriebenen Abschnitt der Webseite auf einer Anzeige;
Empfangen eines Signals, das das Symbol auswählt;
Anzeigen einer grafischen Benutzeroberfläche, GUI (1330), auf dem Display, die angezeigte Information der ersten Shortcut-Taste enthält, in Antwort auf das Signal, das das Symbol auswählt, wobei die angezeigte Information der Tasteninformation (1331) der ersten Shortcut-Taste und Funktionsinformation (1332) über eine Funktion entspricht, die durch die erste Shortcut-Taste realisiert wird, wobei die Funktionsinformation für einen Benutzer durch einen Text, eine Animation oder einen Ton in Antwort auf eine Eingabe bereitgestellt wird, die spezifische Information auswählt, die auf der GUI angezeigt wird;
Empfangen einer Eingabe zum Einrichten einer zweiten Shortcut-Taste basierend auf der dargestellten Information; und
Zuordnen der ersten Shortcut-Taste zur zweiten Shortcut-Taste und Speichern der zugeordneten ersten und zweiten Shortcut-Taste, so dass die zweite Shortcut-Taste die gleiche Funktion ausführt wie die erste Shortcut-Taste,
wobei die erste Shortcut-Taste einer bestimmten Hard-Key-Taste oder einer vorgeschriebenen Taste auf einer virtuellen Tastatur zum Ausführen der bestimmten Funktion innerhalb der Webseite entspricht, und
wobei die erste Shortcut-Taste und die zweite Shortcut-Taste voneinander verschieden sind, und
wobei die erste Shortcut-Taste einer Taste auf einer ersten externen Eingabeeinrichtung (110) entspricht und die zweite Shortcut-Taste einer Taste auf einer zweiten externen Eingabeeinrichtung entspricht, die von der ersten externen Eingabeeinrichtung (110) verschieden ist, und
wobei ferner die externen Eingabeeinrichtungen mindestens einer Einrichtung unter einer Fernbedienung, einem Mobiltelefon, einem Tablet oder einer Tastatur entsprechen.

2. Verfahren nach Anspruch 1, wobei die virtuelle Tastatur oder die erste oder die zweite externen Eingabeeinrichtung, die mit der Anzeigevorrichtung (100) verbunden sind, auf der Anzeige angezeigt wird.

3. Verfahren nach Anspruch 1, wobei ein Bild des Symbols für die erste Shortcut-Taste ein Bild einer Taste auf der ersten oder der zweiten externen Eingabeeinrichtung ist.

4. Verfahren nach Anspruch 1, wobei die Information der auf der GUI angezeigten ersten Shortcut-Taste ferner ein Tastenereignisattribut enthält, das der ersten Shortcut-Taste zugeordnet ist.

5. Verfahren nach Anspruch 4, wobei das Tastenereignisattribut mindestens eine Information unter Onkeydown-Operationsinformation, Onkeypress-Operationsinformation oder Onkeyup-Operationsinformation enthält.

6. Verfahren nach Anspruch 1, ferner mit dem Schritt zum Anzeigen einer Tastenlisten-GUI, die mindestens eine Taste enthält, die für eine Zuordnung zur ersten Shortcut-Taste zur Verfügung steht, auf der Anzeige.

7. Verfahren nach Anspruch 6, wobei die Tastenlisten-GUI ein Bild der Tastatur oder der ersten oder der zweiten externen Eingabeeinrichtung enthält, wobei vorgeschriebene Tasten auf dem Bild, die den Shortcut-Tasten entsprechen, hervorgehoben angezeigt werden.

8. Anzeigevorrichtung (100) mit:
einer Anzeige;
einem Kommunikationsmodul (820), das dafür konfiguriert ist, eine Website aufzurufen, um eine Website auf der Anzeige anzuzeigen, und von der aufgerufenen Website erste Shortcut-Tasteninformation zu empfangen, die vorgegeben ist, um eine bestimmte Funktion auf der Website auszuführen;
einer Eingabeschnittstelle, die dafür konfiguriert ist, ein Signal zum Auswählen der Shortcut-Taste von einer externen Eingabeeinrichtung zu empfangen;
einem Speichermodul (840), das dafür konfiguriert ist, Zuordnungsinformation für einen Zugriff auf die mehreren Shortcut-Tasten zu speichern; und
einer Steuereinheit (850), die dafür konfiguriert ist, die Anzeige basierend auf dem Signal unter Verwendung der gespeicherten Zuordnungsinformation zu steuern,
wobei ein eine erste Shortcut-Taste darstellendes Symbol basierend auf der empfangenen Shortcut-Tasteninformation angezeigt wird;
einer grafischen Benutzeroberfläche, GUI, die angezeigte Information der ersten Shortcut-Taste enthält, die in Antwort auf eine Auswahl des Symbols angezeigt wird, wobei die angezeigte Information Tasteninformation (1331) der ersten Shortcut-Taste entspricht und die Steuereinheit Funktionsinformation (1332) über eine Funktion, die durch die erste Shortcut-Taste realisiert wird, durch einen Text, eine Animation oder einen Ton in Antwort auf eine Eingabe bereitstellt, die auf der GUI angezeigte spezifische Information auswählt, wobei basierend auf der angezeigten Information eine Eingabe zum Einrichten einer zweiten Shortcut-Taste empfangen wird, und wobei die Steuereinheit die erste Shortcut-Taste der zweiten Shortcut-Taste zuordnet, so dass die zweite Shortcut-Taste die gleiche Funktion wie die erste Shortcut-Taste ausführt, und die zugeordneten ersten und zweiten Shortcut-Tasten im Speichermodul speichert,
wobei die erste Shortcut-Taste einer bestimmten Hard-Key-Taste oder einer vorgeschriebenen Taste auf einer virtuellen Tastatur zum Ausführen der bestimmten Funktion innerhalb der Webseite entspricht, und
wobei die erste Shortcut-Taste und die zweite Shortcut-Taste voneinander verschieden sind, und
wobei die erste Shortcut-Taste einer Taste auf einer ersten externen Eingabeeinrichtung entspricht und die zweite Shortcut-Taste einer Taste auf einer zweiten externen Eingabeeinrichtung entspricht, die von der ersten externen Eingabeeinrichtung verschieden ist, und
wobei ferner die externen Eingabeeinrichtungen mindestens einer Einrichtung unter einer Fernbedienung, einem Mobiltelefon, einem Tablet und einer Tastatur entsprechen.

9. Anzeigevorrichtung (100) nach Anspruch 8, wobei die virtuelle Tastatur oder die mit der Anzeigevorrichtung (100) verbundene erste oder zweite externe Eingabeeinrichtung auf der Anzeige angezeigt wird.

## Revendications

1. Procédé de commande d'un dispositif d'affichage (100), comprenant :
l'accès à un site Web ;
la réception, au niveau du dispositif d'affichage (100) en provenance du site Web faisant l'objet d'un accès, d'une information de première touche de raccourci, qui est prédéterminée afin d'exécuter une fonction spécifique sur une page Web ;
la génération d'une icône représentant une première touche de raccourci d'après l'information de première touche de raccourci ;
l'affichage, sur un afficheur, de l'icône générée dans une section prescrite de la page Web ;
la réception d'un signal sélectionnant l'icône ;
l'affichage, sur l'afficheur, d'une interface graphique utilisateur, GUI (1330), qui inclut une information affichée de la première touche de raccourci en réponse au signal sélectionnant l'icône, dans lequel l'information affichée correspond à une information de touche (1331) de la première touche de raccourci et à une information de fonction (1332) sur une fonction réalisée par la première touche de raccourci, moyennant quoi l'information de fonction est fournie à un utilisateur via un texte, une animation ou un son, en réponse à une entrée sélectionnant une information spécifique affichée sur la GUI ;
la réception d'une entrée pour paramétrer une seconde touche de raccourci d'après l'information affichée ; et
le mappage de la première touche de raccourci avec la seconde touche de raccourci et le stockage des première et seconde touches de raccourci mappées de sorte que la seconde touche de raccourci réalise la même fonction que la première touche de raccourci,
dans lequel la première touche de raccourci correspond à une touche non programmable spécifique ou une touche prescrite sur un clavier virtuel pour réaliser la fonction spécifique au sein de la page Web, et
dans lequel la première touche de raccourci et la seconde touche de raccourci sont différentes l'une de l'autre,
et dans lequel la première touche de raccourci correspond à une touche sur un premier dispositif d'entrée externe (110) et la seconde touche de raccourci correspond à une touche sur un second dispositif d'entrée externe différent du premier dispositif d'entrée externe (110),
et dans lequel en outre les dispositifs d'entrée externes correspondent à au moins l'un parmi une télécommande, un téléphone mobile, une tablette ou un clavier.

2. Procédé selon la revendication 1, dans lequel le clavier virtuel est affiché sur l'afficheur ou les premier ou second dispositifs d'entrée externes couplés au dispositif d'affichage (100).

3. Procédé selon la revendication 1, dans lequel une image de l'icône pour la première touche de raccourci est une image d'une touche sur le premier ou second dispositif d'entrée externe.

4. Procédé selon la revendication 1, dans lequel l'information de la première touche de raccourci affichée sur la GUI inclut en outre un attribut d'événement de touche associé à la première touche de raccourci.

5. Procédé selon la revendication 4, dans lequel l'attribut d'événement de touche inclut au moins l'une parmi une information d'opération de touche pressée, une information d'opération de touche enfoncée, ou une information d'opération de touche relâchée.

6. Procédé selon la revendication 1, comprenant en outre :
l'affichage, sur l'afficheur, d'une GUI de liste de touches qui inclut au moins une touche disponible à mapper avec la première touche de raccourci.

7. Procédé selon la revendication 6, dans lequel la GUI de liste de touches inclut une image du clavier ou du premier ou second dispositif d'entrée externe, des touches prescrites sur l'image en surbrillance correspondant à des touches de raccourci.

8. Dispositif d'affichage (100), comprenant :
un afficheur ;
un module de communication (820) configuré pour accéder à un site Web pour afficher une page Web sur l'afficheur et pour recevoir, en provenance du site Web faisant l'objet d'un accès, une information de première touche de raccourci, qui est prédéterminée afin d'exécuter une fonction spécifique sur la page Web ;
une interface d'entrée configurée pour recevoir un signal pour sélectionner le raccourci à partir d'un dispositif d'entrée externe ;
un module de stockage (840) configuré pour stocker une information de mappage pour accéder à la pluralité de touches de raccourci ; et
un dispositif de commande (850) configuré pour commander l'afficheur d'après le signal à l'aide de l'information de mappage stockée,
dans lequel une icône représentant une première touche de raccourci est affichée d'après l'information de touche de raccourci reçue,
une interface graphique utilisateur, GUI, qui inclut une information affichée de la première touche de raccourci affichée en réponse à une sélection de l'icône, dans lequel l'information affichée correspond à une information de touche (1331) de la première touche de raccourci et le dispositif de commande fournit une information de fonction (1332) sur une fonction réalisée par la première touche de raccourci via un texte, une animation ou un son en réponse à une entrée sélectionnant une information spécifique affichée sur la GUI, une entrée pour paramétrer une seconde touche de raccourci est reçue d'après l'information affichée, et le dispositif de commande mappe la première touche de raccourci avec la seconde touche de raccourci de sorte que la seconde touche de raccourci réalise la même fonction que la première touche de raccourci et stocke les première et seconde touches de raccourci mappées dans le module de stockage,
dans lequel la première touche de raccourci correspond à une touche non programmable spécifique ou une touche prescrite sur un clavier virtuel pour réaliser la fonction spécifique au sein de la page Web, et
dans lequel la première touche de raccourci et la seconde touche de raccourci sont différentes l'une de l'autre,
et dans lequel la première touche de raccourci correspond à une touche sur un premier dispositif d'entrée externe et la seconde touche de raccourci correspond à une touche sur un second dispositif d'entrée externe différent du premier dispositif d'entrée externe,
et dans lequel en outre les dispositifs d'entrée externes correspondent à au moins l'un parmi une télécommande, un téléphone mobile, une tablette ou un clavier.

9. Dispositif d'affichage (100) selon la revendication 8, dans lequel le clavier virtuel est affiché sur l'afficheur ou le premier ou le second dispositif d'entrée externe couplé au dispositif d'affichage (100).
